# EUROPEAN PATENT APPLICATION

(11) **EP 3 998 716 A1**
(43) Date of publication of application: **18.05.2022**
(21) Application number: 20836054.5
(22) Date of filing: 03.07.2020
(51) Int. Cl.: H04B 7/185

(54) **ELECTRONIC DEVICE, DISTRIBUTED UNIT DEVICE, WIRELESS COMMUNICATION METHOD, AND STORAGE MEDIUM**

(30) Priority: 11.07.2019 CN 201910624464
(71) Applicant: Sony Group Corporation, Tokyo 108-0075 (JP)
(72) Inventor: WANG, Huajun, Beijing 100028 (CN); LIU, Min, Shanghai 200050 (CN)
(74) Representative: D Young & Co LLP
(86) International application number: PCT/CN2020/100013
(87) International publication number: WO 2021/004377

(57) **Abstract**

The present disclosure relates to an electronic device, a distributed unit device, a wireless communication method, and a storage medium. The electronic device of the present disclosure comprises a processing circuit, configured to: receive a space radiation parameter related to a space radiation feature of a transmit antenna of a user equipment; and determine, according to the space radiation parameter of the user equipment, whether an uplink signal from the user equipment causes interference on other electronic devices. By using the electronic device, the distributed unit device, the wireless communication method, and the storage medium according to the present disclosure, interference on other satellite devices by an uplink signal from a user equipment to a satellite device which provides service for the user equipment can be eliminated or avoided.

## Description

This application claims the priority to Chinese Patent Application No. 201910624464.2 titled "ELECTRONIC DEVICE, DISTRIBUTED UNIT DEVICE, WIRELESS COMMUNICATION METHOD, AND STORAGE MEDIUM", filed on July 11, 2019 with the China National Intellectual Property Administration (CNIPA), which is incorporated herein by reference in its entirety.

### FIELD

Embodiments of the present disclosure generally relate to the technical field of wireless communications, in particular to an electronic device, a distributed unit device, a wireless communication method and a storage medium. More particularly, the present disclosure relates to an electronic device as a base station device in a wireless communication system, an electronic device as a central unit (CU) device in the wireless communication system, an electronic device as a distributed unit (DU) device in the wireless communication system, a wireless communication method performed by the base station device in the wireless communication system, a wireless communication method performed by the CU device in the wireless communication system, a wireless communication method performed by the DU device in the wireless communication system and a computer-readable storage medium.

### BACKGROUND

In a 5G communication system, an electromagnetic wave may be controlled to propagate in a specific direction, so that user equipments in different spatial directions may simultaneously use all spectrum resources for uninterrupted communication, that is, space-division multiple access (SDMA). The propagation of the electromagnetic wave in a specific direction is known as beamforming technology. Based on the beamforming technology, energy of a wireless signal is focused to form a directional beam. An antenna pattern is in a petal shape and is also known as a lobe pattern, and thus the antenna pattern is commonly used to represent antenna directivity. In the antenna pattern, a lobe with the largest radiation intensity is described as a main lobe, and the other lobe is described as a sidelobe.

In a wireless communication system including a terrestrial network (TN) and a non-terrestrial network (NTN), all or part of functions of a base station device may be configured on a satellite device, so that a user equipment can communicate with the base station device arranged on the satellite device. A space between satellite devices decreases with increase of the number of the satellite device providing services for the user equipment. If a transmitting antenna of the user equipment has a wide main lobe, or the transmitting antenna of the user equipment has a strong sidelobe, energy leakage occurs. That is, an uplink signal from a user equipment to a satellite device providing services for the user equipment may generate interference to a satellite device adjacent to the satellite device providing services for the user equipment.

Therefore, it is required to propose a technical solution to eliminate or avoid interference of an uplink signal from a user equipment to a satellite device providing services for the user equipment to other satellite device.

### SUMMARY

This summary section provides a general summary of the present disclosure, rather than a comprehensive disclosure of its full scope or its features.

An electronic device, a distributed unit device, a wireless communication method and a storage medium are provided according to the present disclosure, to eliminate or avoid interference of an uplink signal from a user equipment to a satellite device providing services for the user equipment to other satellite device.

An electronic device is provided according to one aspect of the present disclosure. The electronic device comprises processing circuitry. The processing circuitry is configured to receive a spatial radiation parameter related to a spatial radiation feature of a transmitting antenna of a user equipment; and determine whether an uplink signal from the user equipment generates interference to other electronic device according to the spatial radiation parameter of the user equipment.

A distributed unit (DU) device is provided according to another aspect of the present disclosure. The DU device includes processing circuitry. The processing circuitry is configured to determine whether an uplink signal from a user equipment to the DU device generates interference to other DU device according to an interference prediction report, where the interference prediction report includes identification information of the user equipment, identification information of the other DU device and ephemeris information of the other DU device; and determine an interference coordination strategy for the user equipment to adjust a beam or for the other DU device to adjust frequency domain resources.

A wireless communication method performed by an electronic device is provided according to another aspect of the present disclosure. The wireless communication method includes receiving a spatial radiation parameter related to a spatial radiation feature of a transmitting antenna of a user equipment; and determining whether an uplink signal from the user equipment generates interference to other electronic device according to the spatial radiation parameter of the user equipment.

A wireless communication method performed by a distributed unit (DU) device is provided according to another aspect of the present disclosure. The wireless communication method includes determining whether an uplink signal from a user equipment to the DU device generates interference to other DU device according to an interference prediction report, where the interference prediction report includes identification information of the user equipment, identification information of the other DU device and ephemeris information of the other DU device; and determining an interference coordination strategy for the user equipment to adjust a beam or for the other DU device to adjust frequency domain resources.

A computer-readable storage medium is provided according to another aspect of the present disclosure. The computer-readable storage medium includes computer-executable instructions that, when executed by a computer, cause the computer to perform the wireless communication method according to the present disclosure.

In the electronic device, the distributed unit device, the wireless communication method and the storage medium according to the present disclosure, it may be determined whether an uplink signal from a user equipment generates interference to other satellite device according to a spatial radiation parameter of the user equipment. In this way, a reasonable interference coordination strategy may be determined to eliminate or avoid the interference of the uplink signal from the user equipment to the satellite device providing services to other satellite device.

A further applicable field becomes apparent from the description herein. The description and specific examples in the summary are only schematic, rather than limiting the scope of the present disclosure

### BRIEF DESCRIPTION OF THE DRAWINGS

The drawings described herein are intended only for illustrating the selected embodiments rather than all possible embodiments, and are not intended to limit the scope of the present disclosure. In the drawings:
Figure 1 is a schematic diagram showing an application scenario according to the present disclosure;
Figure 2 is a block diagram showing a configuration example of an electronic device as a gNB (which is an evolution node B in a 5G communication system) according to an embodiment of the present disclosure;
Figure 3 is a signaling flow chart showing an interference coordination process according to an embodiment of the present disclosure;
Figure 4 is a signaling flow chart showing an interference coordination process according to an embodiment of the present disclosure;
Figure 5 is a block diagram showing a configuration example of an electronic device as a CU device according to an embodiment of the present disclosure;
Figure 6 is a signaling flow chart showing an interference coordination process according to an embodiment of the present disclosure;
Figure 7 is a signaling flow chart showing an interference coordination process according to an embodiment of the present disclosure;
Figure 8 is a signaling flow chart showing an interference coordination process according to an embodiment of the present disclosure;
Figure 9 is a signaling flow chart showing an interference coordination process according to an embodiment of the present disclosure;
Figure 10 is a block diagram showing a configuration example of a DU device according to an embodiment of the present disclosure;
Figure 11 is a signaling flow chart showing an interference coordination process according to an embodiment of the present disclosure;
Figure 12 is a signaling flow chart showing an interference coordination process according to an embodiment of the present disclosure;
Figure 13 is a signaling flow chart showing an interference coordination process according to an embodiment of the present disclosure;
Figure 14 is a flow chart showing a wireless communication method performed by an electronic device according to an embodiment of the present disclosure;
Figure 15 is a flow chart showing a wireless communication method performed by a DU device according to an embodiment of the present disclosure;
Figure 16 is a block diagram showing a first schematic configuration example of a gNB;
Figure 17 is a block diagram showing a second schematic configuration example of a gNB;
Figure 18 is a block diagram showing a schematic configuration example of a smart phone; and
Figure 19 is a block diagram showing a schematic configuration example of a car navigation apparatus.

While the present disclosure is susceptible to various modifications and alternative forms, specific embodiments thereof have been shown by way of example in the drawings and are herein described in detail. It should be understood that the description for the specific embodiments herein is not intended to limit the present disclosure to the disclosed specific forms, but on the contrary, the present disclosure is intended to encompass all modifications, equivalents and alternatives that fall within the spirit and scope of the present disclosure. It should be noted that, reference numerals indicate parts corresponding to the reference numerals throughout the drawings.

### DETAILED DESCRIPTION OF EMBODIMENTS

Examples of the present disclosure are described more fully with reference to the drawings. The following description is merely exemplary rather than being intended to limit the present disclosure and applications or uses of the present disclosure.

Exemplary embodiments are provided to make the present disclosure be exhaustive and fully convey the scope of the present disclosure to those skilled in the art. Various specific details such as specific parts, devices and methods are set forth to provide thorough understanding for the embodiments of the present disclosure. It is apparent to those skilled in the art that the exemplary embodiments may be embodied in many different forms without the specific details, and the specific details are not interpreted as a limit for the scope of the present disclosure. In some exemplary embodiments, well-known processes, well-known structures and well-known technology are not described in detail.

Hereinafter, the present disclosure is described according to the following sequence.
1. Description of Scenarios;
2. Configuration Examples of gNB;
3. Configuration Examples of CU device;
4. Configuration Examples of DU device;
5. Method Embodiments; and
6. Application Examples.

### [1. Description of Scenarios]

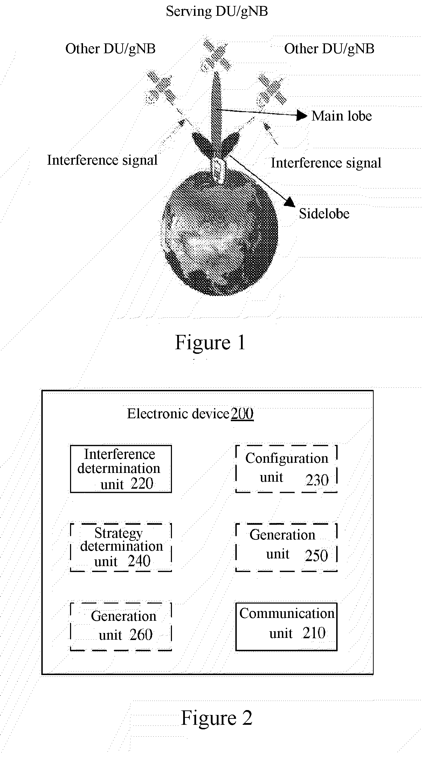

Figure 1 is a schematic diagram showing an application scenario according to an embodiment of the present disclosure. As shown in Figure 1, a user equipment arranged on the ground may transmit an uplink signal to a network side device providing services for the user equipment, such as a gNB or DU device. Here, the gNB or DU device may be arranged on a satellite device, and one or more gNB/DU are next to the gNB/DU providing services for the user equipment. Figure 1 shows that a transmitting antenna of the user equipment includes one main lobe and two sidelobes. In a scenario shown in Figure 1, if the transmitting antenna of the user equipment has a wide main lobe, or the transmitting antenna of the user equipment has a strong sidelobe, energy leakage occurs. That is, an interference signal may be generated to another gNB/DU other than the gNB/DU providing services for the user equipment.

A network side device (including a base station device, a CU device and a DU device) in a wireless communication system, a wireless communication method performed by a network side device in a wireless communication system, and a computer-readable storage medium for such a scenario are provided according to the present disclosure, to eliminate or avoid interference of an uplink signal from a user equipment to a satellite device providing services for the user equipment to other satellite device.

According to an embodiment of the present disclosure, the wireless communication system may be a 5G (that is, 5th generation) or 6G (that is, 6th generation) communication system. Specifically, the wireless communication system according to the present disclosure may be a satellite communication system including a TN and a NTN.

The network side device according to the present disclosure may be any type of TRP (transmit and receive Port) and a base station device. For example, the network side device may be an eNB, or a gNB. The gNB may include a gNB-CU and a gNB-DU. Both the gNB-CU and the gNB-DU are integrated in the gNB, so that the gNB can communicate with user equipment. The gNB-CU functions as an information center and a management unit within a service range of the gNB, and is configured to exchange control information with a user equipment within the service range of the gNB. The gNB-DU is configured to exchange data information with a user equipment within the service range of the gNB. That is, in the scenario shown in Figure 1, both the gNB-CU and the gNB-DU are integrated in the gNB, and the gNB may be arranged in the satellite device. According to the embodiment of the present disclosure, interference of an uplink signal from a user equipment to the gNB providing services for the user equipment to another gNB can be eliminated or avoided.

The network side device according to the present disclosure may further be the CU device or the DU device. Here, the CU device may be separate from the DU device, that is, the CU device and the DU device each are arranged in independent devices. The CU device is configured to exchange control information with user equipment. The DU device is configured to exchange data information with user equipment. One CU device may manage resources of multiple DU devices. That is, in the scenario shown in Figure 1, the CU device is separate from the DU device, and the DU device is arranged in the satellite device. According to the embodiment of the present disclosure, interference of an uplink signal from user equipment to the DU device providing services for the user equipment to other DU device can be eliminated or avoided.

The DU device according to the present disclosure may be a satellite device in a satellite communication system. Specifically, the DU device may be a low earth orbit (LEO) satellite device, a medium earth orbit (MEO) satellite device, a highly elliptical orbiting (HEO) satellite device and a high altitude platform station (HAPS).

The CU device according to the present disclosure may be the satellite device in the satellite communication system. Specifically, the CU device may be a geosynchronous orbit (GEO) satellite device. The CU device according to the present disclosure may further be a ground base station device in the satellite communication system. For example, the CU device may be the eNB or the gNB

The user equipment according to the present disclosure may be a mobile terminal (such as a smartphone, a tablet personal computer (PC), a notebook PC, a portable game terminal, a portable/dongle mobile router and a digital camera) or a vehicle terminal (such as a vehicle navigation apparatus). The user equipment may further be implemented as a terminal (which is also referred to as a machine type communication (MTC) terminal) performing machine to machine (M2M) communications. In addition, the user equipment may be a wireless communication module (such as an integrated circuit module including a single wafer) arranged in each of the above terminals.

### [2. Configuration Examples of gNB]

Figure 2 is a block diagram showing a configuration example of an electronic device 200 according to an embodiment of the present disclosure. Here, the electronic device 200 may serve as the network side device in the wireless communication system. Specifically, the electronic device 200 may serve as a base station device in the wireless communication system, such as the gNB, that is, the gNB integrating with the gNB-CU and the gNB-DU. According to the embodiment of the present disclosure, the gNB may be any type of the satellite device or the high altitude platform station.

As shown in Figure 2, the electronic device 200 may include a communication unit 210 and an interference determination unit 220.

Here, units of the electronic device 200 may be included in processing circuitry. It should be noted that, the electronic device 200 may include one or more processing circuitries. Further, the processing circuitry may include various discrete functional units to perform different functions and/or operations. It should be noted that these functional units may be physical entities or logical entities, and units with different names may be implemented by a same physical entity.

According to an embodiment of the present disclosure, the electronic device 200 may receive a spatial radiation parameter related to a spatial radiation feature of a transmitting antenna of a user equipment through the communication unit 210.

According to an embodiment of the present disclosure, the interference determination unit 220 may determine whether an uplink signal from the user equipment generates interference to other electronic device according to the spatial radiation parameter of the user equipment.

As described above, the electronic device 200 according to the embodiment of the present disclosure may determine whether the uplink signal from the user equipment generates interference to other electronic device according to the spatial radiation parameter of the user equipment. In this way, a reasonable interference coordination strategy may be determined to eliminate or avoid the interference of the uplink signal from the user equipment to the electronic device 200 providing services for the user equipment to other electronic device.

According to an embodiment of the present disclosure, the electronic device 200 may be the network side device providing services for user equipment, and the electronic device 200 may further be the satellite device. Further, the uplink signal from the user equipment refers to an uplink signal from the user equipment to the electronic device 200. In addition, other electronic device may further be the satellite device, such as another gNB other than the electronic device 200 providing services for the user equipment. That is, according to the embodiment of the present disclosure, the interference determination unit 220 may determine whether the uplink signal from the user equipment to the electronic device 200 generates interference to other satellite device other than the electronic device 200 providing services for the user equipment according to the spatial radiation parameter of the user equipment.

According to an embodiment of the present disclosure, the spatial radiation parameter of the user equipment includes a radiation direction parameter of a primary beam of the transmitting antenna and a polarization direction parameter of the transmitting antenna. According to the embodiment of the present disclosure, the primary beam includes at least two strong sidelobes.

Here, the spatial radiation parameter may include a radiation direction parameter of at least two strong sidelobes of the transmitting antenna. Since the sidelobes are symmetrically arranged on both sides of the main lobe in an antenna radiation diagram, the spatial radiation parameter generally includes even number of the sidelobes, such as 2 and 4. Further, the strong sidelobes included in the spatial radiation parameter may be close to the main lobe. That is, in a case that the spatial radiation parameter includes the radiation direction parameter of two strong sidelobes, the two strong sidelobes are arranged on both sides of the main lobe and close to the main lobe, and each side of the main lobe has one strong side lobe. In a case that the spatial radiation parameter includes a radiation direction parameter of four strong sidelobes, the four strong sidelobes are arranged on both sides of the main lobe and close to the main lobe, that is, each side of the main lobe has two strong sidelobes, and so on.

According to an embodiment of the present disclosure, the primary beam may further include a main lobe. Further, the spatial radiation parameter of the user equipment may further include a radiation direction parameter of the main lobe. In addition, the spatial radiation parameter of the user equipment may further include a beam width parameter of the primary beam. That is, the spatial radiation parameter of the user equipment may further include one or more of the following parameters: the radiation direction parameter of the main lobe, the beam width parameter of the main lobe and a beam width parameter of at least two strong sidelobes.

According to an embodiment of the present disclosure, the electronic device 200 may receive the spatial radiation parameter through a physical uplink control channel (PUCCH) or a physical uplink share channel (PUSCH). In addition, the user equipment may use an earth-centered earth-fixed (ECEF) coordinate system when reporting the spatial radiation parameter.

According to an embodiment of the present disclosure, as shown in Figure 2, the electronic device 200 may further include a configuration unit 230. The configuration unit 230 is configured to configure content and a transmission manner of the spatial radiation parameter.

According to an embodiment of the present disclosure, the configuration unit 230 is configured to configure, for the user equipment, the number of the primary beam included in the spatial radiation parameter; or the number of the strong sidelobes included in the spatial radiation parameter. In this way, the user equipment may determine which radiation direction parameters (alternatively, further including a beam width parameter) of the strong sidelobes are required to be included in the spatial radiation parameter according to the configuration of the configuration unit 230.

According to an embodiment of the present disclosure, the configuration unit 230 may configure, for the user equipment, at least one of a range of a beam width of the main lobe and a range of a beam width of the strong sidelobe. For example, the configuration unit 230 may configure, for the user equipment, an angle range of the beam width of the main lobe and/or an angle range of the beam width of the strong sidelobes. As a non-limited example, the range of the beam width of the main lobe may be xdB width, and the range of the beam width of the strong sidelobe may also be xdB width. In an embodiment, x is equal to 3. That is, a width of an included angle between two half power points of the beam is described as the beam width, that is, the width of the included angle at 3dB lower than a peak value in the transmitting antenna radiation diagram is described as the beam width.

According to an embodiment of the present disclosure, the electronic device 200 may periodically receive the spatial radiation parameter from the user equipment. In such case, the configuration unit 230 may further configure, for the user equipment, a period for reporting the spatial radiation parameter.

According to an embodiment of the present disclosure, the configuration unit 230 may configure, for the user equipment, the content and the transmission manner of the spatial radiation parameter, and generate configuration information. The configuration information includes information about the content and transmission manner of the spatial radiation parameters configured by the configuration unit 230 for the user equipment. Further, the electronic device 200 may transmit the configuration information to the user equipment. Therefore, the user equipment may transmit the spatial radiation parameter according to the configuration information from the electronic device 200.

According to an embodiment of the present disclosure, since the polarization direction parameter of the transmitting antenna of the user equipment is unchanged, the user equipment may report the polarization direction parameter to the electronic device 200 when accessing to a network without reporting the polarization direction parameter again. For other parameters in the spatial radiation parameter, the user equipment may report periodically or report in an event.

Further, according to an embodiment of the present disclosure, since the electronic device 200 as the network side device may be the satellite device with a fixed operation track, the user equipment may adjust a beam direction according to the operation track of the electronic device 200 to align a radiation direction of the main lobe with the electronic device 200. Therefore, the user equipment may report the spatial radiation parameter to the electronic device 200 when accessing to the network without reporting the spatial radiation parameter periodically. The electronic device 200 may predict an updated spatial radiation parameter of the user equipment at any time instant according to the spatial radiation parameter reported by the user equipment when accessing to the network.

According to an embodiment of the present disclosure, the spatial radiation parameter described above is related to beamforming of the user equipment, and is closely related to the spatial radiation feature of the transmitting antenna of the user equipment. Therefore, the interference determination unit 220 may determine whether the uplink signal from the user equipment generates interference to other electronic device according to the spatial radiation parameter.

According to an embodiment of the present disclosure, the electronic device 200 may receive ephemeris information of other electronic device through the communication unit 210. For example, the electronic device 200 may periodically exchange the ephemeris information with a satellite device adjacent to the electronic device 200 through the communication unit 210. That is, the electronic device 200 may periodically receive the ephemeris information of the adjacent satellite device from the adjacent satellite device, or may periodically transmit ephemeris information of the electronic device 200 to a satellite device adjacent to the electronic device 200.

According to an embodiment of the present disclosure, the interference determination unit 220 may determine whether the uplink signal from the user equipment generates interference to other electronic device according to the spatial radiation parameter of the user equipment and the ephemeris information of other electronic device. Specifically, the interference determination unit 220 may determine the uplink signal of the user equipment generates interference to which electronic device according to the spatial radiation parameter of the user equipment and the ephemeris information of other electronic device adjacent to the electronic device 200.

Here, the interference determination unit 220 may determine position information of other electronic device at any time instant according to the ephemeris information of other electronic device, and determine a signal strength of the uplink signal from the user equipment to the electronic device 200 at the other electronic device at any time instant according to the spatial radiation parameter of the user equipment, so as to determine whether the uplink signal from the user equipment generates interference to the other electronic device. Here, the interference determination unit 220 may determine the signal strength and determine the interference according to any method known in the art, which is not limited in the present disclosure.

According to an embodiment of the present disclosure, in a case where frequency domain resources of the user equipment are different from frequency domain resources of the other electronic device, the uplink signal from the user equipment does not generate interference to the other electronic device. Only in a case where the frequency domain resources of the user equipment are the same as the frequency domain resources of the other electronic device, if the signal strength of the uplink signal from the user equipment at the other electronic device is strong enough, interference is generated to the other electronic device. Therefore, the interference determination unit 220 may further determine whether the uplink signal from the user equipment generates interference to the other electronic device according to the spatial radiation parameter of the user equipment, the frequency domain resources of the user equipment and the frequency domain resources of the other electronic device.

Specifically, in a case where the frequency domain resources of the user equipment are the same as the frequency domain resources of the other electronic device, the interference determination unit 220 determines whether the uplink signal from the user equipment generates interference to the other electronic device according to the spatial radiation parameter of the user equipment as described above. Similarly, the interference determination unit 220 may determine whether the uplink signal from the user equipment generates interference to the other electronic device according to the spatial radiation parameter of the user equipment and the ephemeris information of the other electronic device.

According to an embodiment of the present disclosure, since the electronic device 200 provides services for the user equipment, the electronic device 200 may allocate frequency domain resources for the user equipment. That is, the electronic device 200 knows the frequency domain resources of the user equipment. Further, the electronic device 200 may acquire frequency domain resources of the other electronic device from the other electronic device through the communication unit 210. For example, the electronic device 200 may exchange the frequency domain resources with the other electronic device when exchanging the ephemeris information. Alternatively, the other electronic device may transmit, only when frequency domain resources of the other electronic device change, frequency domain resource information to the electronic device 200. Therefore, the electronic device 200 may know the frequency domain resources of the user equipment and the frequency domain resources of the other electronic device.

As described above, the interference determination unit 220 may determine whether the uplink signal from the user equipment to the electronic equipment 200 generates interference to the other satellite device according to the spatial radiation parameter (alternatively, further including the ephemeris information of the other electronic device and/or the frequency domain resources of the user equipment and the frequency domain resources of the other electronic device) of the user equipment. Hereinafter, a strategy determination unit 240 according to the embodiment of the present disclosure is described.

According to an embodiment of the present disclosure, the strategy determination unit 240 is configured to determine an interference coordination strategy for the user equipment to adjust a beam or for the other electronic device to adjust frequency domain resources in a case where the uplink signal from the user equipment generates interference to the other electronic device. Here, the interference coordination strategy includes the following two strategies that the user equipment adjusts the beam; and the other electronic device adjusts the frequency domain resources.

According to an embodiment of the present disclosure, the electronic device 200 may receive a beamforming capability of the user equipment from the user equipment through the communication unit 210. Here, the beamforming capability parameter of the user equipment indicates whether the user equipment is capable of adjusting a beam. For example, the beamforming capability may be represented by 1-bit information. According to the embodiment of the present disclosure, the user equipment may report the beamforming capability parameter when reporting the spatial radiation parameter. Alternatively, the user equipment may further report the beamforming capability parameter when accessing to the network.

According to an embodiment of the present disclosure, the strategy determination unit 240 may determine the interference coordination strategy according to the beamforming capability of the user equipment. Specifically, in a case where the beamforming capability of the user equipment indicates that the user equipment is capable of adjusting a beam, the strategy determination unit 240 may determine that the interference coordination strategy indicates that the user equipment adjusts the beam. In a case where the beamforming capability of the user equipment indicates that the user equipment is incapable of adjusting a beam, the strategy determination unit 240 may determine that the interference coordination strategy indicates that the other electronic device adjusts frequency domain resources.

According to an embodiment of the present disclosure, as shown in Figure 2, the electronic device 200 may further include a generation unit 250. The generation unit 250 is configured to generate beam adjustment indication information for the user equipment to adjust the beam in a case where the uplink signal from the user equipment generates interference to the other electronic device and the beamforming capability of the user equipment indicates that the user equipment is capable of adjusting a beam.

According to an embodiment of the present disclosure, the beam adjustment indication information generated by the generation unit 250 may include time information of beam adjustment, such as a starting time instant and an ending time instant of the beam adjustment. That is, the user equipment may determine a period from the starting time to the ending time instant to adjust a beam according to the beam adjustment indication information. Alternatively, the time information of beam adjustment may further include the starting time instant and duration of the beam adjustment. That is, the user equipment can determine to adjust the beam during the duration from the starting time instant according to the beam adjustment indication information.

According to an embodiment of the present disclosure, the beam adjustment indication information generated by the generation unit 250 may further include adjusted beam information. For example, the adjusted beam information may be indicated by transmission configuration indication (TCI). That is, the electronic device 200 may configure an adjusted beam for the user equipment, so that the adjusted beam can avoid interference to the other satellite device. In this way, the user equipment may determine the adjusted beam information according to the beam adjustment indication information to adjust to a new beam within a time period indicated by the beam adjustment indication information, so as to avoid interference to the other satellite device.

According to an embodiment of the present disclosure, the beam adjustment indication information generated by the generation unit 250 may further include ephemeris information of the other interfered electronic device. That is, the user equipment may determine the adjusted beam information according to ephemeris information of the other interfered electronic device, so that the adjusted beam can avoid interference to the other satellite device. In this way, the user equipment may adjust to a new beam within a time period indicated by the beam adjustment indication information, so as to avoid interference to the other satellite device.

As described above, in a case where the beamforming capability of the user equipment indicates that the user equipment can dynamically adjust a beam, that is, the user equipment is capable of adjusting the beam, the strategy determination unit 240 may determine a strategy for the user equipment to adjust the beam to avoid or eliminate interference to the other satellite device.

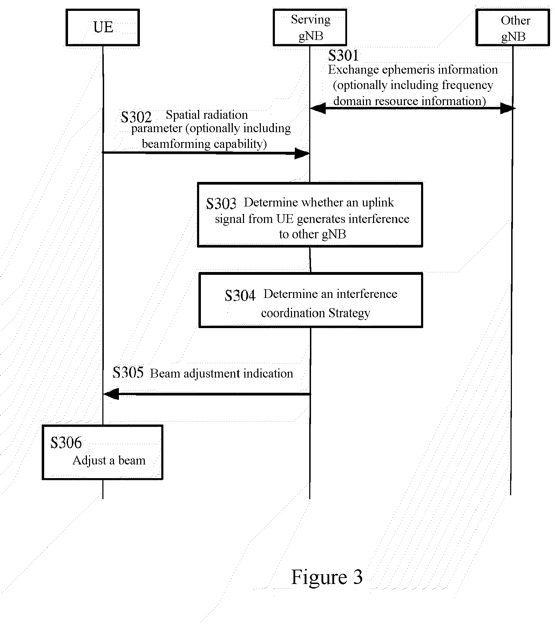

Figure 3 is a signaling flow chart showing an interference coordination process according to an embodiment of the present disclosure. In Figure 3, a serving gNB may be implemented by the electronic device 200. As shown in Figure 3, in step S301, the serving gNB of the UE may periodically exchange ephemeris information with the other gNB. Alternatively, the serving gNB may further exchange used frequency domain resource information with the other gNB. In step S302, the UE reports a spatial radiation parameter to the serving gNB. Alternatively, the UE may further report a beamforming capability of the UE to the serving gNB. In step S303, the serving gNB determines whether an uplink signal from the UE to the serving gNB generates interference to the other gNB according to the spatial radiation parameter of the UE. Next, in step S304, the serving gNB determines an interference coordination strategy. Here, it is assumed that the interference coordination strategy determined by the serving gNB indicates that the UE adjusts the beam. Next, in step S305, the serving gNB transmits the beam adjustment indication information to the UE. Next, in step S306, the UE adjusts the beam according to the beam adjustment indication information. Therefore, the interference coordination strategy indicating that the UE adjusts a beam can avoid the interference of the uplink signal from the UE to the serving gNB to the other gNB.

According to an embodiment of the present disclosure, as shown in Figure 2, the electronic device 200 may further include a generation unit 260. The generation unit 260 is configured to generate frequency domain resource adjustment request information for the other electronic device to adjust frequency domain resources in a case where the uplink signal from the user equipment generates interference to the other electronic device and the beamforming capability of the user equipment indicates that the user equipment is incapable of adjusting a beam.

According to an embodiment of the present disclosure, the frequency domain resource adjustment request information generated by the generation unit 260 may include interfered frequency domain resource information of the other electronic device. In this way, the other electronic device can know interfered frequency domain resources and determine adjusted frequency domain resources by itself. Alternatively, the frequency domain resource adjustment request information generated by the generation unit 260 may further include adjusted frequency domain resource information. That is, the electronic device 200 may recommend adjusted frequency domain resources for the other electronic device. In this way, the other electronic device may adjust the frequency domain resources according to the adjusted frequency domain resources included in the frequency domain resource adjustment request information.

According to an embodiment of the present disclosure, the electronic device 200 may further receive frequency domain resource adjustment response information from the other electronic device through the communication unit 210. Here, in a case where the frequency domain resource adjustment request information includes the adjusted frequency domain resources, if the other electronic device agrees to use the adjusted frequency domain resources included in the frequency domain resource adjustment request information, the frequency domain resource adjustment response information may include confirmation information. The confirmation information indicates that the other electronic device agrees to use the adjusted frequency domain resources included in the frequency domain resource adjustment request information. Alternatively, the frequency domain resource adjustment response information may further include the adjusted frequency domain resource information. In this way, the electronic device 200 can know the adjusted frequency domain resource information of the other electronic device.

As described above, a manner in which the electronic device 200 coordinates frequency domain resources with another electronic device is described in a non-limiting way. In this process, since the electronic device 200 and the other electronic device are satellite devices, communication between the satellite devices consumes a lot of resources and time. In addition, when the satellite devices communicate with each other, it is required to avoid interference with another inter-satellite link or satellite-earth link.

According to an embodiment of the present disclosure, in a process of the electronic device 200 coordinating frequency domain resources with the other electronic device, the other electronic device may be tracked by using a narrow directional beam, to transmit at least one of the frequency domain resource adjustment request information and the frequency domain resource adjustment response information. Alternatively, at least one of the frequency domain resource adjustment request information and the frequency domain resource adjustment response information may further be transmitted by multiplexing a channel carrying information other than the frequency domain resource adjustment request information and the frequency domain resource adjustment response information. In a case of multiplexing another channel, the transmitted information may be set to a high priority and/or the transmitted information may be set to a high power, so that the electronic device 200 can reliably communicate with the other electronic device. Alternatively, at least one of the frequency domain resource adjustment request information and the frequency domain resource adjustment response information may further be transmitted by using a specially reserved dedicated channel for at least one of the frequency domain resource adjustment request information and the frequency domain resource adjustment response information. Therefore, at least one of the frequency domain resource adjustment request information and the frequency domain resource adjustment response information may be transmitted by using a directional beam, a multiplexed channel or a dedicated channel, so as to ensure the reliability of a frequency domain coordination process between the electronic device 200 and the other electronic device.

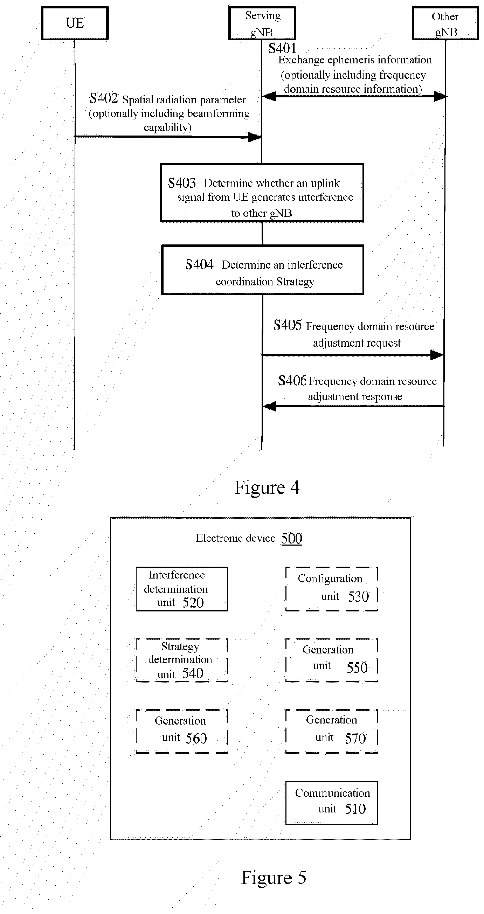

Figure 4 is a signaling flow chart showing an interference coordination process according to an embodiment of the present disclosure. In Figure 4, the serving gNB may be implemented by the electronic device 200. As shown in Figure 4, in step S401, the serving gNB of the UE may periodically exchange ephemeris information with the other gNB. Optionally, the serving gNB may further exchange used frequency domain resource information with the other gNB. In step S402, the UE reports a spatial radiation parameter to the serving gNB. Optionally, the UE may further report a beamforming capability of the UE to the serving gNB. In step S403, the serving gNB determines whether an uplink signal from the UE to the serving gNB generates interference to the other gNB according to the spatial radiation parameter of the UE. Next, in step S404, the serving gNB determines an interference coordination strategy. Here, it is assumed that the interference coordination strategy determined by the serving gNB indicates that the other gNB adjusts frequency domain resources. Next, in step S405, the serving gNB transmits the frequency domain resource adjustment request information to the other gNB. Next, in step S406, the other gNB may determine whether to adjust the used frequency domain resources and transmit the frequency domain resource adjustment response information to the serving gNB. Therefore, the interference coordination strategy indicating that the other gNB adjusts the frequency domain resources can avoid the interference of the uplink signal from the UE to the serving gNB to the other gNB.

It can be seen that the electronic device 200 according to the embodiment of the present disclosure may determine whether an uplink signal from a user equipment generates interference to the other electronic device according to the spatial radiation parameter of the user equipment. Further, the electronic device 200 may further determine a reasonable interference coordination strategy. The interference coordination strategy may indicate that the user equipment adjusts a beam and the other electronic device adjusts frequency domain resources. In this way, the interference of the uplink signal from the user equipment to the electronic device 200 providing services for the user equipment to the other electronic device can be eliminated or avoided.

### [3. Configuration Examples of CU device]

Figure 5 is a block diagram showing a structure of an electronic device 500 according to an embodiment of the present disclosure. The electronic device 500 herein may serve as a network side device in a wireless communication system. Specifically, the electronic device 500 may serve as a CU device in the wireless communication system. According to the embodiment of the present disclosure, the CU device may be a satellite device or a ground base station device in a satellite communication system. That is, in the embodiment, the CU device and the DU device each are arranged in independent devices. The electronic device 500 as the CU device is configured to exchange control information with user equipment. The DU device is configured to exchange data information with user equipment.

As shown in Figure 5, the electronic device 500 may include a communication unit 510 and an interference determination unit 520. Alternatively, the electronic device 500 may further include at least one of a configuration unit 530, a strategy determination unit 540, a generation unit 550 and a generation unit 560. Here, the communication unit 510, the interference determination unit 520, the configuration unit 530, the strategy determination unit 540, the generation unit 550 and the generation unit 560 may have the same or similar functions as the communication unit 210, the interference determination unit 220, the configuration unit 230, the strategy determination unit 240, the generation unit 250 and the generation unit 260 in Figure 2. Therefore, the description of the same parts is omitted hereinafter.

Here, units of the electronic device 500 may be included in processing circuitry. It should be noted that, the electronic device 500 may include one or more processing circuitry. Further, the processing circuitry may include various discrete functional units to perform different functions and/or operations. It should be noted that these functional units may be physical entities or logical entities, and units with different names may be implemented by a same physical entity.

According to an embodiment of the present disclosure, the electronic device 500 as the CU device providing services for a user equipment may determine whether an uplink signal from the user equipment to a DU device providing services for the user equipment generates interference to another DU device. Here, the DU device providing services for the user equipment and the other DU device may be satellite devices.

According to an embodiment of the present disclosure, the electronic device 500 may receive a spatial radiation parameter of the user equipment from the DU device providing services for the user equipment through the communication unit 510. Here, the DU device providing services for the user equipment may transmit spatial radiation parameters of multiple user equipments within a service range of the DU device together to the electronic device 500. Further, the electronic device 500 may receive a beamforming capability of the user equipment from the DU device providing services for the user equipment through the communication unit 510. Similarly, the DU device providing services for the user equipment may transmit beamforming capabilities of multiple user equipments within the service range of the DU device together to the electronic device 500. Further, the electronic device 500 may receive frequency domain resource information of the user equipment from the DU device providing services for the user equipment through the communication unit 510. Here, since the frequency domain resource information of the user equipment is allocated by the DU device providing services for the user equipment, the DU device providing services for the user equipment may transmit frequency domain resource information of multiple user equipments within the service range of the DU device to the electronic device 500 together.

According to an embodiment of the present disclosure, similar to the configuration unit 230, the configuration unit 530 may configure, for the user equipment, configuration information related to the content and the transmission manner of the spatial radiation parameter. Similar to the interference determination unit 220, the interference determination unit 520 may determine whether the uplink signal from the user equipment to the DU device providing services for the user equipment generates interference to the other DU device based on the spatial radiation parameter of the user equipment (alternatively, further including ephemeris information of the other DU device and/or the frequency domain resource information of the user equipment and frequency domain resource information of the other DU device). Similar to the strategy determination unit 240, the strategy determination unit 540 may determine an interference coordination strategy in a case where it is determined that the uplink signal from the user equipment generates interference to the other DU device. The interference coordination strategy indicates that the user equipment adjusts the beam and the other DU device adjusts the frequency domain resources.

According to an embodiment of the present disclosure, similar to the generation unit 250, in a case where the strategy determination unit 540 determines that the interference coordination strategy indicates that the user equipment adjusts the beam, the generation unit 550 may generate beam adjustment indication information for the user equipment to adjust the beam. Further, the electronic device 500 may transmit the beam adjustment indication information to the DU device providing services for the user equipment through the communication unit 510, so that the DU device can forward the beam adjustment indication information to the user equipment.

According to an embodiment of the present disclosure, as shown in Figure 5, the electronic device 500 may further include a generation unit 570. In a case where the strategy determination unit 540 determines that the interference coordination strategy indicates that the user equipment adjusts the beam, the generation unit 570 may generate an interference prediction report. The interference prediction report includes identification information of the user equipment, identification information of the other DU device which is interfered and ephemeris information of the other DU device. Further, the electronic device 500 may transmit the interference prediction report to the DU device providing services for the user equipment, so that the DU device providing services for the user equipment generates beam adjustment indication information according to the interference prediction report and transmit the beam adjustment indication information to the user equipment. That is, the beam adjustment indication information may be generated by the DU device providing services for the user equipment instead of the electronic device 500.

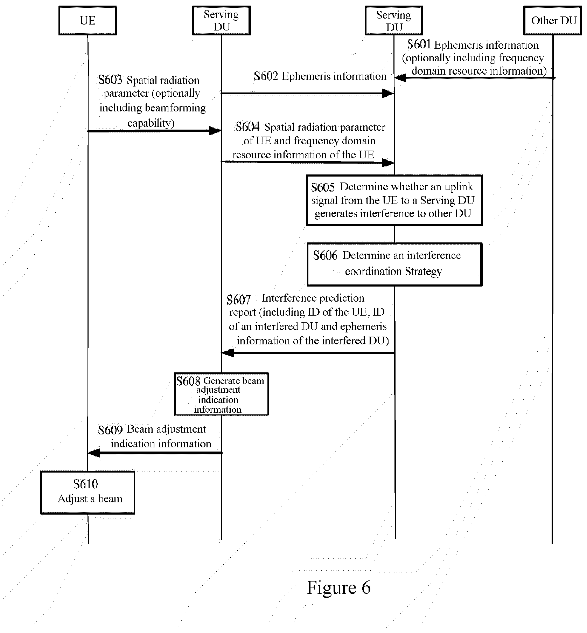

Figure 6 is a signaling flow chart showing an interference coordination process according to an embodiment of the present disclosure. In Figure 6, a serving CU may be implemented by the electronic device 500. The serving CU may determine whether an uplink signal from the UE to a serving DU generates interference to the other DU. In step S601, the other DU device may periodically transmit ephemeris information to the serving CU device. Alternatively, the other DU device may further periodically transmit frequency domain resource information used by the the other DU device to the serving CU device. In step S602, the serving DU device may periodically transmit the ephemeris information to the serving CU device. In step S603, the UE reports a spatial radiation parameter to the serving DU device. Alternatively, the UE may further report a beamforming capability of the UE to the serving DU device. In step S604, the serving DU device may transmit spatial radiation parameters and frequency domain resource information of all UEs within a service range of the serving DU device to the serving CU device. In step S605, the serving CU device determines whether an uplink signal from the UE to the serving DU device generates interference to the other DU device according to the spatial radiation parameters of the UE. Next, in step S606, the serving CU device determines an interference coordination strategy. Here, it is assumed that the interference coordination strategy determined by the serving CU device indicates that the UE adjusts the beam. Next, in step S607, the serving CU device generates an interference prediction report and transmits the interference prediction report to the serving DU device. Next, in step S608, the serving DU device generates beam adjustment indication information according to the interference prediction report. Next, in step S609, the serving DU device transmits the beam adjustment indication information to the UE. Next, in step S610, the UE adjusts a beam according to the beam adjustment indication information.

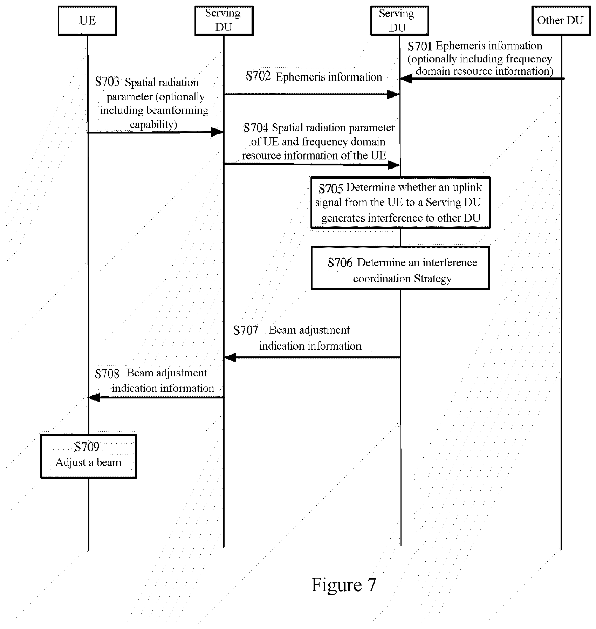

Figure 7 is a signaling flow chart showing an interference coordination process according to an embodiment of the present disclosure. In Figure 7, a serving CU may be implemented by the electronic device 500. The serving CU may determine whether an uplink signal from the UE to a serving DU generates interference to the other DU. In step S701, the other DU device may periodically transmit ephemeris information to the serving CU device. Alternatively, the other DU device may further periodically transmit frequency domain resource information used by the the other DU device to the serving CU device. In step S702, the serving DU device may periodically transmit the ephemeris information to the serving CU device. In step S703, the UE reports a spatial radiation parameter to the serving DU device. Alternatively, the UE may further report a beamforming capability of the UE to the serving DU device. In step S704, the serving DU device may transmit spatial radiation parameters and frequency domain resource information of all UEs within a service range of the serving DU device to the serving CU device. In step S705, the serving CU device determines whether the uplink signal from the UE to the serving DU device generates interference to the other DU device according to the spatial radiation parameters of the UEs. Next, in step S706, the serving CU device determines an interference coordination strategy. Here, it is assumed that the interference coordination strategy determined by the serving CU device indicates that the UE adjusts the beam. Next, in step S707, the serving CU device generates beam adjustment indication information and transmits the beam adjustment indication information to the serving DU device. Next, in step S708, the serving DU device forwards the beam adjustment indication information to the UE. Next, in step S709, the UE adjusts a beam according to the beam adjustment indication information.

As shown in Figures 6 and 7, the interference coordination strategy indicating that the UE adjusts the beam can avoid the interference of the uplink signal from the UE to the serving DU device to the other DU device. A difference between Figures 6 and 7 is that in Figure 6, the serving DU device generates the beam adjustment indication information, and in Figure 7, the serving CU device generates the beam adjustment indication information.

According to an embodiment of the present disclosure, in a case where the strategy determination unit 540 determines that the interference coordination strategy indicates that an interfered DU device adjusts frequency domain information, the generation unit 560 may generate frequency domain resource adjustment request information for the other DU device to adjust frequency domain resources.

Similar to the generation unit 260, the frequency domain resource adjustment request information generated by the generation unit 560 may include interfered frequency domain resource information of the other DU device. Alternatively, the frequency domain resource adjustment request information generated by the generation unit 560 may further include adjusted frequency domain resource information. Further, the electronic device 500 may further receive frequency domain resource adjustment response information from the other DU device through the communication unit 510. Here, in a case where the frequency domain resource adjustment request information includes the adjusted frequency domain resources, if the other DU device agrees to use the adjusted frequency domain resources included in the frequency domain resource adjustment request information, the frequency domain resource adjustment response information may include confirmation information. The confirmation information indicates that the other DU device agrees to use the adjusted frequency domain resources included in the frequency domain resource adjustment request information. Alternatively, the frequency domain resource adjustment response information may further include the adjusted frequency domain resource information.

According to an embodiment of the present disclosure, in a case where the strategy determination unit 540 determines that the interference coordination strategy indicates that an interfered DU device adjusts frequency domain information, the generation unit 570 may generate an interference prediction report. The interference prediction report includes identification information of the user equipment, identification information of the other DU device and ephemeris information of the other DU device. Further, the interference prediction report may further include frequency domain resource information used by an interfered DU device. Next, the electronic device 500 may transmit the interference prediction report to a DU device providing services for the user equipment, so that the DU device providing services for the user equipment directly transmits frequency domain resource adjustment request information to the interfered DU device. The frequency domain resource adjustment request information may include interfered frequency domain resource information of the other DU device. Alternatively, the frequency domain resource adjustment request information may further include adjusted frequency domain resources. The DU device providing services for the user equipment may further directly receive frequency domain resource adjustment response information from the interfered DU device. The frequency domain resource adjustment response information may include confirmation information. The confirmation information indicates that the other DU device agrees to use the adjusted frequency domain resources included in the frequency domain resource adjustment request information. Alternatively, the frequency domain resource adjustment response information may further include the adjusted frequency domain resource information.

As described above, the serving CU device may coordinate frequency domain resources with the interfered DU device, or the serving DU device may coordinate frequency domain resources with the interfered DU device. In such a process, at least one of the frequency domain resource adjustment request information and the frequency domain resource adjustment response information may be transmitted by using a directional beam, a multiplexed channel or a dedicated channel, so as to ensure the reliability of the frequency domain coordination process.

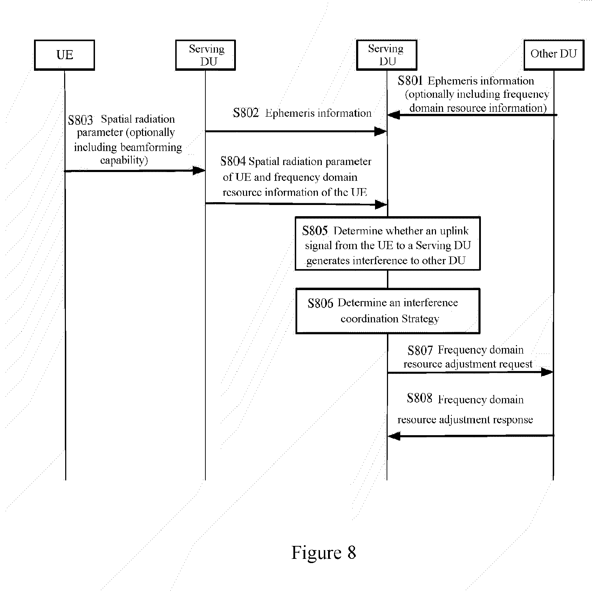

Figure 8 is a signaling flow chart showing an interference coordination process according to an embodiment of the present disclosure. In Figure 8, a serving CU may be implemented by the electronic device 500. The serving CU may determine whether an uplink signal from the UE to the serving DU generates interference to the other DU. In step S801, the other DU device may periodically transmit ephemeris information to the serving CU device. Alternatively, the other DU device may further periodically transmit frequency domain resource information used by the other DU device to the serving CU device. In step S802, the serving DU device may periodically transmit the ephemeris information to the serving CU device. In step S803, the UE reports a spatial radiation parameter to the serving DU device. Alternatively, the UE may further report a beamforming capability of the UE to the serving DU device. In step S804, the serving DU device may transmit spatial radiation parameters and frequency domain resource information of all UEs within a service range of the serving DU device to the serving CU device. In step S805, the serving CU device determines whether the uplink signal from the UE to the serving DU device generates interference to the other DU device according to the spatial radiation parameters of the UE. Next, in step S806, the serving CU device determines an interference coordination strategy. Here, it is assumed that the interference coordination strategy determined by the serving CU device indicates that the other DU device adjusts the frequency domain resources. Next, in step S807, the serving CU device transmits frequency domain resource adjustment request information to the other DU device. Next, in step S808, the other DU device transmits frequency domain resource adjustment response information to the serving CU device.

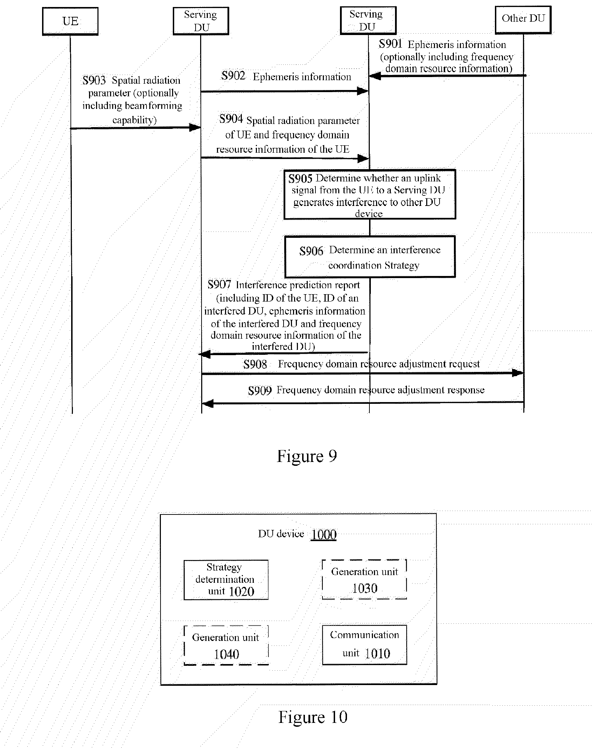

Figure 9 is a signaling flow chart showing an interference coordination process according to an embodiment of the present disclosure. In Figure 9, a serving CU may be implemented by the electronic device 500. The serving CU may determine whether an uplink signal from the UE to a serving DU generates interference to the other DU. In step S901, the other DU device may periodically transmit ephemeris information to the serving CU device. Alternatively, the other DU device may further periodically transmit frequency domain resource information used by the other DU device to the serving CU device. In step S902, the serving DU device may periodically transmit the ephemeris information to the serving CU device. In step S903, the UE reports a spatial radiation parameter to the serving DU device. Alternatively, the UE may further report beamforming capability of the UE to the serving DU device. In step S904, the serving DU device may transmit spatial radiation parameters and frequency domain resource information of all UEs within a service range of the serving DU device to the serving CU device. In step S905, the serving CU device determines whether the uplink signal from the UE to the serving DU device generates interference to the other DU device according to the spatial radiation parameters of the UE. Next, in step S906, the serving CU device determines an interference coordination strategy. Here, it is assumed that the interference coordination strategy determined by the serving CU device indicates that the other DU device adjusts the frequency domain resources. Next, in step S907, the serving CU device transmits an interference prediction report to the serving DU device. The interference prediction report includes ID of the UE, ID of an interfered DU device, ephemeris information of the interfered DU device and frequency domain resource information of the interfered DU device. Next, in step S908, the serving DU device transmits frequency domain resource adjustment request information to the other DU device. Next, in step S909, the other DU device transmits frequency domain resource adjustment response information to the serving DU device.

As shown in Figures 8 and 9, the interference coordination strategy indicating that the interfered DU device adjusts the frequency domain resources can avoid the interference of the uplink signal from the UE to the serving DU device to the other DU device. A difference between Figures 8 and 9 is that in Figure 8, the serving CU device and the interfered DU device coordinate the frequency domain resources, and in Figure 9, the serving DU device and the interfered DU device coordinate the frequency domain resources.

As described above, according to the embodiment of the present disclosure, the electronic device 500 as the serving CU device may determine whether the uplink signal from the user equipment to the serving DU device generates interference to the other DU device. In addition, the electronic device 500 may determine the interference coordination strategy. Therefore, a reasonable interference coordination strategy is generated to avoid or eliminate interference in the wireless communication system including TN and NTN.

According to an embodiment of the present disclosure, the electronic device 500 as the serving CU device may further determine whether the uplink signal from the user equipment to the serving DU device generates interference to the other DU device, and then the serving DU device determines the interference coordination strategy.

According to an embodiment of the present disclosure, the generation unit 570 may generate an interference prediction report in a case where the uplink signal from the user equipment generates interference to the other DU device. The interference prediction report includes identification information of the user equipment, identification information of the other DU device and ephemeris information of the other DU device. Next, the electronic device 500 may transmit the interference prediction report to a DU device providing services for the user equipment through the communication unit 510, so that the DU device providing services for the user equipment determines an appropriate interference coordination strategy according to the received interference prediction report.

It can be seen that according to the embodiment of the present disclosure, it may be determined whether the uplink signal from the user equipment to the DU device providing services for the user equipment generates interference to the other DU device according to the spatial radiation parameter of the user equipment. Further, a reasonable interference coordination strategy may be determined by the serving DU device or the serving CU device. The interference coordination strategy may include a strategy indicating that the user equipment adjusts a beam and a strategy indicating that the other DU device adjusts frequency domain resources. In this way, the interference of the uplink signal from the user equipment to the DU device providing services for the user equipment to the other DU device can be eliminated or avoided.

### [4. Configuration Examples of DU device]

Figure 10 is a block diagram showing a configuration example of a DU device 1000 according to an embodiment of the present disclosure. According to the embodiment of the present disclosure, the DU device may be a satellite device in a satellite communication system. That is, in the embodiment, the CU device and the DU device each are arranged in independent devices. The CU device is configured to exchange control information with user equipment. The DU device 1000 is configured to exchange data information with user equipment.

As shown in Figure 10, the DU device 1000 may include a communication unit 1010 and a strategy determination unit 1020.

Here, units of the DU device 1000 may be included in processing circuitry. It should be noted that, the DU device 1000 may include one or more processing circuitries. Further, the processing circuitry may include various discrete functional units to perform different functions and/or operations. It should be noted that these functional units may be physical entities or logical entities, and units with different names may be implemented by a same physical entity.

According to an embodiment of the present disclosure, the DU device 1000 may receive an interference prediction report through the communication unit 1010.

According to an embodiment of the present disclosure, the strategy determination unit 1020 may determine whether an uplink signal from the user equipment to the DU device 1000 generates interference to the other DU device according to the interference prediction report. The interference prediction report includes identification information of the user equipment, identification information of the other DU device and ephemeris information of the other DU device. In addition, the strategy determination unit 1020 may determine an interference coordination strategy for the user equipment to adjust a beam or for the other DU device to adjust frequency domain resources.

As described above, the DU device 1000 according to the embodiment of the present disclosure may determine the interference coordination strategy according to the interference prediction report. The interference coordination strategy may include a strategy indicating that the user equipment adjusts a beam and a strategy indicating that the other DU device adjusts frequency domain resources. In this way, the interference of the uplink signal from the user equipment to the DU device providing services for the user equipment to the other DU device can be eliminated or avoided.

According to an embodiment of the present disclosure, the DU device 1000 may receive an interference prediction report from a CU device providing services for the user equipment.

According to an embodiment of the present disclosure, the DU device 1000 may receive a spatial radiation parameter related to a spatial radiation feature of a transmitting antenna of the user equipment from the user equipment through the communication unit 1010. Further, the DU device 1000 may transmit the spatial radiation parameter of the user equipment to the CU device through the communication unit 1010. Here, the DU device 1000 may respectively transmit spatial radiation parameters of user equipments to the CU device, or periodically transmit the spatial radiation parameters of multiple user equipments to the CU device together. Next, the DU device 1000 may receive, from the CU device, the interference prediction report determined according to the spatial radiation parameters of the user equipment.

As described above, the spatial radiation parameter of the user equipment may include one or more of the following parameters: the radiation direction parameter of at least two strong sidelobes of the transmitting antenna, the polarization direction parameter of the transmitting antenna, the radiation direction parameter of the main lobe, the beam width parameter of the main lobe, and the beam width parameter of at least two strong sidelobes. The content and transmission manner of the spatial radiation parameter are described in detail above, which are not described redundantly herein.

According to an embodiment of the present disclosure, the DU device 1000 may receive a beamforming capability of the user equipment from the user equipment through the communication unit 1010. Here, the user equipment may report the beamforming capability when reporting the spatial radiation parameter. Further, the DU device 1000 may further receive the beamforming capability of the user equipment when the user equipment accesses to the network.

According to an embodiment of the present disclosure, the strategy determination unit 1020 may determine the interference coordination strategy according to the beamforming capability of the user equipment. In a case where the beamforming capability of the user equipment indicates that the user equipment is capable of adjusting a beam, the strategy determination unit 1020 may determine that the interference coordination strategy indicates that the user equipment adjusts the beam. In a case where the beamforming capability of the user equipment indicates that the user equipment is incapable of adjusting a beam, the strategy determination unit 1020 may determine that the interference coordination strategy indicates that the other DU device adjusts frequency domain resources.

According to an embodiment of the present disclosure, as shown in Figure 10, the DU device 1000 may further include a generation unit 1030. The generation unit 1030 is configured to generate beam adjustment indication information for the user equipment to adjust a beam in a case where an uplink signal from the user equipment generates interference to the other DU device and the beamforming capability of the user equipment indicates that the user equipment is capable of adjusting a beam.

According to an embodiment of the present disclosure, the beam adjustment indication information generated by the generation unit 1030 may include time information of beam adjustment, such as a starting time instant and an ending time instant of the beam adjustment. That is, the user equipment may determine a period from the starting time instant to the ending time instant to adjust a beam according to the beam adjustment indication information. Alternatively, the time information of beam adjustment may further include the starting time instant and duration of the beam adjustment. That is, the user equipment can determine to adjust the beam during the duration from the starting time instant according to the beam adjustment indication information.

According to an embodiment of the present disclosure, the beam adjustment indication information generated by the generation unit 1030 may further include adjusted beam information. For example, the adjusted beam information may be indicated by transmission configuration indication (TCI). That is, the DU device 1000 may configure an adjusted beam for the user equipment, so that the adjusted beam can avoid interference to the other satellite device. In this way, the user equipment may determine the adjusted beam information according to the beam adjustment indication information to adjust to a new beam within a time period indicated by the beam adjustment indication information, so as to avoid interference to the other satellite device.

According to an embodiment of the present disclosure, the beam adjustment indication information generated by the generation unit 1030 may further include ephemeris information of the other interfered DU device. That is, the user equipment may determine the adjusted beam information according to ephemeris information of the other interfered DU device, so that the adjusted beam can avoid interference to the other satellite device. In this way, the user equipment may adjust to a new beam within a time period indicated by the beam adjustment indication information, so as to avoid interference to the other satellite device.

According to an embodiment of the present disclosure, as shown in Figure 10, the DU device 1000 may further include a generation unit 1040. The generation unit 1040 is configured to generate frequency domain resource adjustment request information for the other DU device to adjust frequency domain resources in a case where the uplink signal from the user equipment generates interference to the other DU device and the beamforming capability of the user equipment indicates that the user equipment is incapable of adjusting a beam.

According to an embodiment of the present disclosure, the frequency domain resource adjustment request information generated by the generation unit 1040 may include interfered frequency domain resource information of the other DU device. Alternatively, the frequency domain resource adjustment request information generated by the generation unit 1040 may further include adjusted frequency domain resource information.

According to an embodiment of the present disclosure, the DU device 1000 may further receive frequency domain resource adjustment response information through the communication unit 1010. Here, in a case where the frequency domain resource adjustment request information includes the adjusted frequency domain resources, if the other DU device agrees to use the adjusted frequency domain resources included in the frequency domain resource adjustment request information, the frequency domain resource adjustment response information may include confirmation information. The confirmation information indicates that the other DU device agrees to use the adjusted frequency domain resources included in the frequency domain resource adjustment request information. Alternatively, the frequency domain resource adjustment response information may further include the adjusted frequency domain resource information.

According to an embodiment of the present disclosure, in a case where the DU device 1000 is capable of communicating directly with the other DU device, the DU device 1000 may transmit the frequency domain resource adjustment request information to the other DU device, and may receive the frequency domain resource adjustment response information from the other DU device. In a case where the DU device 1000 is incapable of communicating directly with the other DU device, the DU device 1000 may transmit the frequency domain resource adjustment request information to a CU device, and the CU device forwards the frequency domain resource adjustment request information to the other DU device. Similarly, the DU device 1000 may receive frequency domain resource adjustment response information from the CU device that is transmitted by the other DU device to the CU device. According to an embodiment of the present disclosure, in a process of coordinating frequency domain resources, at least one of the frequency domain resource adjustment request information and the frequency domain resource adjustment response information may be transmitted by using a directional beam, a multiplexed channel or a dedicated channel, so as to ensure the reliability of the frequency domain coordination process.

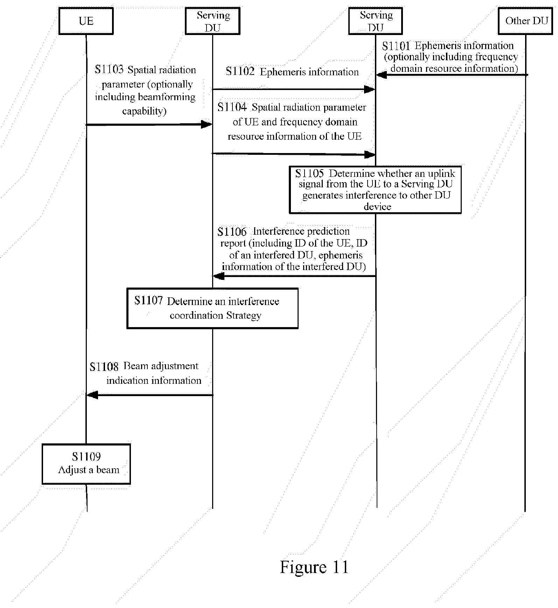

Figure 11 is a signaling flow chart showing an interference coordination process according to an embodiment of the present disclosure. In Figure 11, a serving CU may be implemented by the electronic device 500. A serving DU may be implemented by the DU device 1000. The serving CU may determine whether an uplink signal from the UE to the serving DU generates interference to the other DU, and the serving DU may determine an interference coordination strategy. In step S1101, the other DU device may periodically transmit ephemeris information to the serving CU device. Alternatively, the other DU device may further periodically transmit frequency domain resource information used by the other DU device to the serving CU device. In step S 1102, the serving DU device may periodically transmit the ephemeris information to the serving CU device. In step S1103, the UE reports a spatial radiation parameter to the serving DU device. Alternatively, the UE may further report beamforming capability of the UE to the serving DU device. In step S1104, the serving DU device may transmit spatial radiation parameters and frequency domain resource information of all UEs within a service range of the serving DU device to the serving CU device. In step S1105, the serving CU device determines whether the uplink signal from the UE to the serving DU device generates interference to the other DU device according to the spatial radiation parameters of the UE. Next, in step S 1106, the serving CU transmits an interference prediction report to the serving DU. The interference prediction report includes ID of the UE, ID of an interfered DU device and ephemeris information of the interfered DU device. Next, in step S1107, the serving DU determines an interference coordination strategy. Here, it is assumed that the interference coordination strategy determined by the serving DU device indicates that the UE adjusts a beam. Next, in step S1108, the serving DU device generates beam adjustment indication information and transmits the beam adjustment indication information to the UE. Next, in step S1109, the UE adjusts the beam according to the beam adjustment indication information. Therefore, the interference coordination strategy determined by the serving DU device indicating that the UE adjusts a beam can avoid or eliminate the interference of the uplink signal from the UE to the serving DU device to the other DU device.

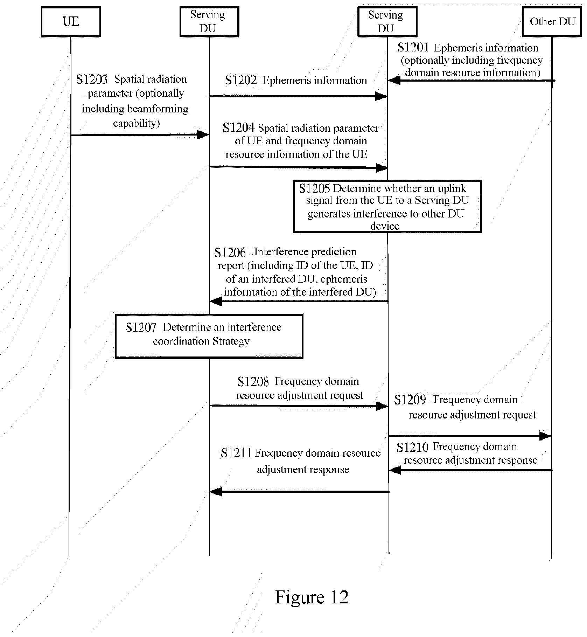

Figure 12 is a signaling flow chart showing an interference coordination process according to an embodiment of the present disclosure. In Figure 12, a serving CU may be implemented by the electronic device 500. A serving DU may be implemented by the DU device 1000. The serving CU may determine whether an uplink signal from the UE to the serving DU generates interference to the other DU, and the serving DU may determine an interference coordination strategy. In step S1201, the other DU device may periodically transmit ephemeris information to the serving CU device. Alternatively, the other DU device may further periodically transmit frequency domain resource information used by the other DU device to the serving CU device. In step S1202, the serving DU device may periodically transmit the ephemeris information to the serving CU device. In step S1203, the UE reports a spatial radiation parameter to the serving DU device. Alternatively, the UE may further report a beamforming capability of the UE to the serving DU device. In step S1204, the serving DU device may transmit spatial radiation parameters and frequency domain resource information of all UEs within a service range of the serving DU device to the serving CU device. In step S1205, the serving CU device determines whether the uplink signal from the UE to the serving DU device generates interference to the other DU device according to the spatial radiation parameters of the UE. Next, in step S1206, the serving CU transmits an interference prediction report to the serving DU. The interference prediction report includes ID of the UE, ID of an interfered DU device and ephemeris information of the interfered DU device. Next, in step S1207, the serving DU determines an interference coordination strategy. Here, it is assumed that the interference coordination strategy determined by the serving DU device indicates that the interfered DU device adjusts frequency domain information. Next, in step S1208, the serving DU device transmits frequency domain resource adjustment request information to the serving CU device. Next, in step S1209, the serving CU device forwards the frequency domain resource adjustment request information to the interfered DU device. Next, in step S1210, the interfered DU device transmits frequency domain resource adjustment response information to the serving CU device. Next, in step S1211, the serving CU device transmits the frequency domain resource adjustment response information to the serving DU device. Therefore, the interference coordination strategy determined by the serving DU device indicating that the interfered DU device adjusts frequency domain information can avoid or eliminate the interference of the uplink signal from the UE to the serving DU device to the other DU device.

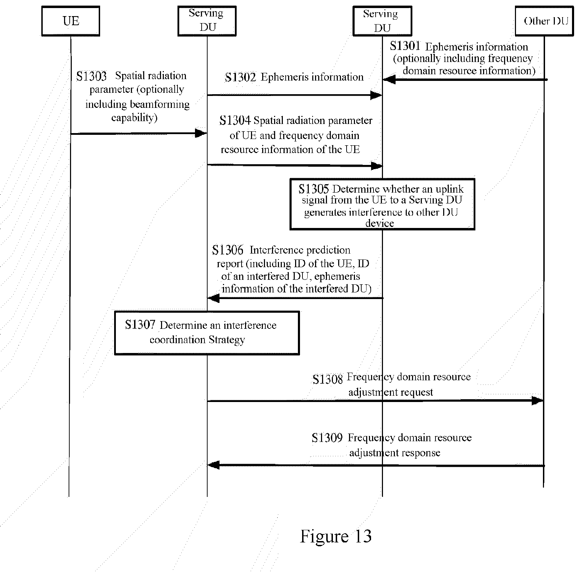

Figure 13 is a signaling flow chart showing an interference coordination process according to an embodiment of the present disclosure. In Figure 13, a serving CU may be implemented by the electronic device 500. A serving DU may be implemented by the DU device 1000. The serving CU may determine whether an uplink signal from the UE to the serving DU generates interference to the other DU, and the serving DU may determine an interference coordination strategy. In step S1301, the other DU device may periodically transmit ephemeris information to the serving CU device. Alternatively, the other DU device may further periodically transmit frequency domain resource information used by the other DU device to the serving CU device. In step S1302, the serving DU device may periodically transmit the ephemeris information to the serving CU device. In step S1303, the UE reports a spatial radiation parameter to the serving DU device. Alternatively, the UE may further report a beamforming capability of the UE to the serving DU device. In step S1304, the serving DU device may transmit spatial radiation parameters and frequency domain resource information of all UEs within a service range of the serving DU device to the serving CU device. In stepS1305, the serving CU device determines whether the uplink signal from the UE to the serving DU device generates interference to the other DU device according to the spatial radiation parameters of the UE. Next, in stepS1306, the serving CU transmits an interference prediction report to the serving DU. The interference prediction report includes ID of the UE, ID of an interfered DU device and ephemeris information of the interfered DU device. Next, in step S1307, the serving DU determines an interference coordination strategy. Here, it is assumed that the interference coordination strategy determined by the serving DU device indicates that the interfered DU device adjusts frequency domain information. Next, in step S1308, the serving DU device transmits frequency domain resource adjustment request information to the interfered DU device. Next, in step S1309, the interfered DU device transmits frequency domain resource adjustment response information to the serving DU device. Therefore, the interference coordination strategy determined by the serving DU device indicating that the interfered DU device adjusts frequency domain information can avoid or eliminate the interference of the uplink signal from the UE to the serving DU device to the other DU device.

As described above, the DU device 1000 according to the embodiment of the present disclosure may be configured to exchange data information with the user equipment. The electronic device 500 as the CU device may be configured to exchange control information with the user equipment. Therefore, all the embodiments of the electronic device 500 described above may be adaptively applied to this.

### [5. Method Embodiments]

Hereinafter, a wireless communication method performed by the electronic device 200 or the electronic device 500 in a wireless communication system according to embodiments of the present disclosure is described in detail.

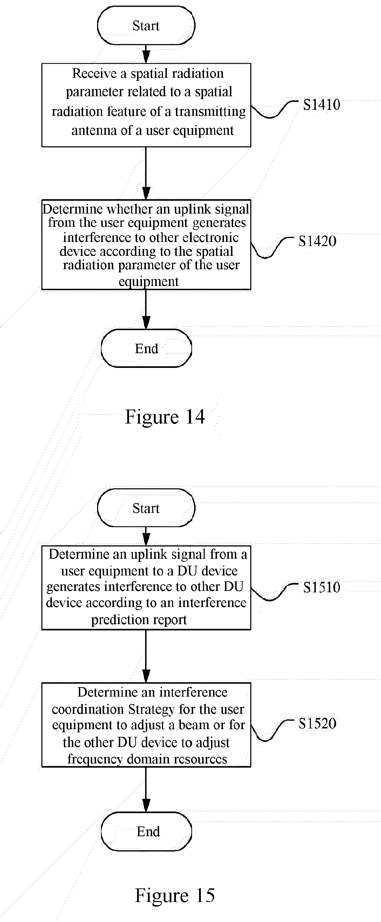

Figure 14 is a flow chart showing a wireless communication method performed by the electronic device 200 or the electronic device 500 in a wireless communication system according to an embodiment of the present disclosure.

As shown in Figure 14, in step S1410, a spatial radiation parameter related to a spatial radiation feature of a transmitting antenna of a user equipment is received.

Next, in step S1420, it is determined whether an uplink signal from the user equipment generates interference to the other electronic device according to the spatial radiation parameter of the user equipment.

In an embodiment, the other electronic device is a satellite device.

In an embodiment, the spatial radiation parameter of the user equipment includes a radiation direction parameter of at least two strong sidelobes of the transmitting antenna and a polarization direction parameter of the transmitting antenna. In addition, the wireless communication method further includes configuring, for the user equipment, the number of the strong sidelobes included in the spatial radiation parameter.

In an embodiment, the spatial radiation parameter of the user equipment may further include one or more of the following parameters: a radiation direction parameter of a main lobe, a beam width parameter of the main lobe and a beam width parameter of at least two strong sidelobes. In addition, the wireless communication method further includes configuring, for the user equipment, at least one of a range of a beam width of the main lobe and a range of a beam width of the strong sidelobes.

In an embodiment, the wireless communication method further includes configuring, for the user equipment, a period for reporting the spatial radiation parameter for the user equipment, and periodically receiving the spatial radiation parameter of the user equipment.

In an embodiment, the wireless communication method further includes receiving ephemeris information of the other electronic device; and determining whether the uplink signal from the user equipment generates interference to the other electronic device according to the spatial radiation parameter of the user equipment and the ephemeris information of the other electronic device.

In an embodiment, the determining whether the uplink signal from the user equipment generates interference to the other electronic device includes determining, according to the spatial radiation parameter of the user equipment, frequency domain resources of the user equipment, frequency domain resources of the other electronic device, whether the uplink signal from the user equipment generates interference to the other electronic device.

In an embodiment, the determining whether the uplink signal from the user equipment generates interference to the other electronic device includes determining, according to the spatial radiation parameter of the user equipment, whether the uplink signal from the user equipment generates interference to the other electronic device in a case where the frequency domain resources of the user equipment are the same as the frequency domain resources of the other electronic device.

In an embodiment, the wireless communication method further includes determining an interference coordination strategy for the user equipment to adjust a beam or for the other electronic device to adjust frequency domain resources in a case where the uplink signal from the user equipment generates interference to the other electronic device.

In an embodiment, the determining the interference coordination strategy includes receiving a beamforming capability of the user equipment from the user equipment; and determining the interference coordination strategy according to the beamforming capability.

In an embodiment, the wireless communication method further includes generating beam adjustment indication information for the user equipment to adjust a beam in a case where the uplink signal from the user equipment generates interference to the other electronic device and the beamforming capability of the user equipment indicates that the user equipment is capable of adjusting a beam.

In an embodiment, the beam adjustment indication information includes a starting time instant and an ending time instant of beam adjustment, or includes the starting time instant and duration of the beam adjustment.

In an embodiment, the other electronic device is a satellite device. The beam adjustment indication information further includes ephemeris information of the other interfered electronic device, or adjusted beam information.

In an embodiment, the wireless communication method further includes generating frequency domain resource adjustment request information for the other electronic device to adjust frequency domain resources in a case where the uplink signal from the user equipment generates interference to the other electronic device and the beamforming capability of the user equipment indicates that the user equipment is incapable of adjusting a beam. The frequency domain resource adjustment request information includes at least one of interfered frequency domain resource information of the other electronic device and adjusted frequency domain resource information. The wireless communication method further includes receiving frequency domain resource adjustment response information from the other electronic device. The frequency domain resource adjustment response information includes the adjusted frequency domain resource information.

In an embodiment, the wireless communication method further includes transmitting the frequency domain resource adjustment request information to the other electronic device, and/or receiving the frequency domain resource adjustment response information from the other electronic device by multiplexing a channel carrying information other than the frequency domain resource adjustment request information and the frequency domain resource adjustment response information; or transmitting the frequency domain resource adjustment request information to the other electronic device, and/or receiving the frequency domain resource adjustment response information from the other electronic device by using a dedicated channel for the frequency domain resource adjustment request information and the frequency domain resource adjustment response information.

In an embodiment, in a case where the electronic device is a CU device and the other electronic device is a DU device, the wireless communication method further includes determining whether an uplink signal from the user equipment to a DU device providing services for the user equipment generates interference to the other DU device; and generating an interference prediction report in a case where the uplink signal from the user equipment generates interference to the other DU device, where the interference prediction report includes identification information of the user equipment, identification information of the other DU device and ephemeris information of the other DU device; and transmitting the interference prediction report to the DU device providing services for the user equipment.

According to the embodiment of the present disclosure, the method described above may be performed by the electronic device 200 or the electronic device 500 according to the embodiment of the present disclosure. Therefore, all the foregoing embodiments of the electronic device 200 or the electronic device 500 are applicable to this.

Hereinafter, a wireless communication method performed by the DU device 1000 in the wireless communication system according to an embodiment of the present disclosure is described in detail.

Figure 15 is a flow chart showing a wireless communication method performed by a DU device 1000 in a wireless communication system according to an embodiment of the present disclosure.

As shown in Figure 15, in step S1510, it is determined, according to an interference prediction report, whether an uplink signal from a user equipment to the DU device generates interference to the other DU device. The interference prediction report includes identification information of the user equipment, identification information of the other DU device and ephemeris information of the other DU device.

Next, in step S1520, it is determined an interference coordination strategy for the user equipment to adjust a beam or for the other DU device to adjust frequency domain resources.

In an embodiment, the determining an interference coordination strategy includes receiving a beamforming capability of the user equipment from the user equipment; and determining the interference coordination strategy according to the beamforming capability of the user equipment.

In an embodiment, the wireless communication method further includes generating beam adjustment indication information for the user equipment to adjust a beam in a case where the uplink signal from the user equipment to the DU device generates interference to the other DU device and the beamforming capability of the user equipment indicates that the user equipment is capable of adjusting a beam.

In an embodiment, the beam adjustment indication information includes a starting time instant and an ending time instant of beam adjustment, or includes the starting time instant and duration of the beam adjustment.

In an embodiment, the beam adjustment indication information further includes ephemeris information of the other DU device, or adjusted beam information.

In an embodiment, the wireless communication method further includes generating frequency domain resource adjustment request information for the other electronic device to adjust frequency domain resources, in a case where the uplink signal from the user equipment to the DU device generates interference to the other DU device and the beamforming capability of the user equipment indicates that the user equipment is incapable of adjusting a beam, where the frequency domain resource adjustment request information includes adjusted frequency domain resource information; and receiving frequency domain resource adjustment response information, wherein the frequency domain resource adjustment response information includes the adjusted frequency domain resource information.

In an embodiment, the wireless communication method further includes receiving, form the user equipment, a spatial radiation parameter related to a spatial radiation feature of a transmitting antenna of the user equipment; transmitting the spatial radiation parameter of the user equipment to the control unit (CU) device; and receiving, from the CU device, the interference prediction report determined according to the spatial radiation parameter of the user equipment.

In an embodiment, the spatial radiation parameter of the user equipment includes one or more of the following parameters: a radiation direction parameter of at least two strong sidelobes of the transmitting antenna, a polarization direction parameter of the transmitting antenna, a beam width parameter of the main lobe and a beam width parameter of the at least two strong sidelobes.

According to the embodiment of the present disclosure, the method described above may be performed by the DU device 1000 according to the embodiment of the present disclosure. Therefore, all the foregoing embodiments of the DU device 1000 are applicable to this.

### [6. Application Examples]

### [Application Examples of the Base Station]

### [First Application Example]

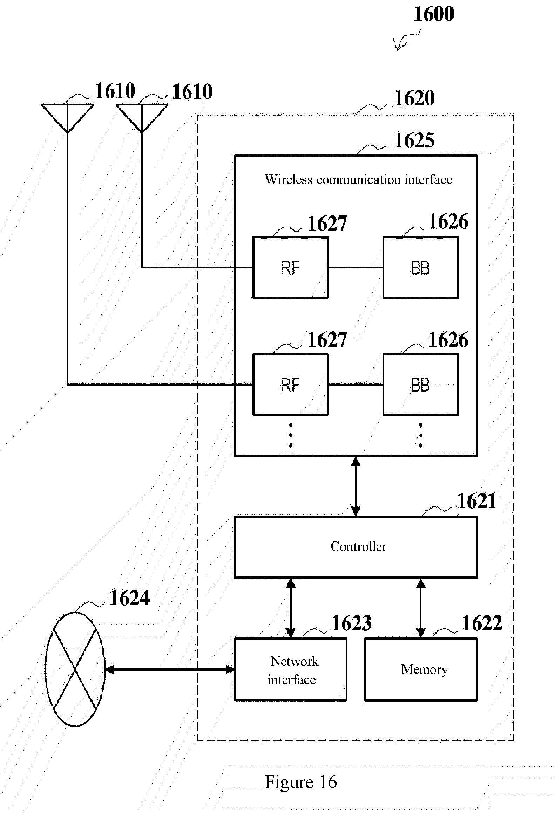

Figure 16 is a block diagram showing a first schematic configuration example of a gNB to which the technology of the present disclosure may be applied. A gNB 1600 includes one or more antennas 1610 and a base station device 1620. The base station device 1620 and each antenna 1610 may be connected to each other via an RF cable.

Each of the antennas 1610 includes a single or multiple antenna elements (such as multiple antenna elements included in a multi-input multi-output (MIMO) antenna), and is used for the base station device 1620 to transmit and receive wireless signals. As shown in Figure 16, the gNB 1600 may include the multiple antennas 1610. For example, the multiple antennas 1610 may be compatible with multiple frequency bands used by the gNB 1600. Although Figure 16 shows the example in which the gNB 1600 includes the multiple antennas 1610, the gNB 1600 may also include a single antenna 1610.

The base station device 1620 includes a controller 1621, a memory 1622, a network interface 1623, and a wireless communication interface 1625.

The controller 1621 may be, for example, a CPU or a DSP, and operates various functions of a higher layer of the base station device 1620. For example, the controller 1621 generates a data packet from data in signals processed by the wireless communication interface 1625, and transfers the generated packet via the network interface 1623. The controller 1621 may bundle data from multiple base band processors to generate the bundled packet, and transfer the generated bundled packet. The controller 1621 may have logical functions of performing control such as radio resource control, radio bearer control, mobility management, admission control and scheduling. The control may be performed in corporation with a gNB or a core network node in the vicinity. The memory 1622 includes a RAM and a ROM, and stores a program executed by the controller 1621, and various types of control data (such as a terminal list, transmission power data, and scheduling data).

The network interface 1623 is a communication interface for connecting the base station device 1620 to a core network 1624. The controller 1621 may communicate with a core network node or another gNB via the network interface 1623. In this case, the gNB 1600, and the core network node or the other gNB may be connected to each other via a logical interface (such as an S1 interface and an X2 interface). The network interface 1623 may further be a wired communication interface or a wireless communication interface for wireless backhaul. If the network interface 1623 is a wireless communication interface, the network interface 1623 may use a higher frequency band for wireless communication than a frequency band used by the wireless communication interface 1625.

The wireless communication interface 1625 supports any cellular communication scheme (such as Long Term Evolution (LTE) and LTE-Advanced), and provides wireless connection to a terminal positioned in a cell of the gNB 1600 via the antenna 1610. The wireless communication interface 1625 may typically include, for example, a BB processor 1626 and an RF circuit 1627. The BB processor 1626 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 1626 may have a part or all of the above-described logical functions instead of the controller 1621. The BB processor 1626 may be a memory that stores a communication control program, or a module that includes a processor and a related circuit configured to execute the program. Updating the program may allow the functions of the BB processor 1626 to be changed. The module may be a card or a blade that is inserted into a slot of the base station device 1620. Alternatively, the module may further be a chip that is mounted on the card or the blade. In addition, the RF circuit 1627 may include, for example, a mixer, a filter, and an amplifier, and transmits and receives wireless signals via the antenna 1610.

As shown in Figure 16, the wireless communication interface 1625 may include the multiple BB processors 1626. For example, the multiple BB processors 1626 may be compatible with multiple frequency bands used by the gNB 1600. As shown in Figure 16, the wireless communication interface 1625 may include the multiple RF circuits 1627. For example, the multiple RF circuits 1627 may be compatible with multiple antenna elements. Although Figure 16 shows the example in which the wireless communication interface 1625 includes the multiple BB processors 1626 and the multiple RF circuits 1627, the wireless communication interface 1625 may further include a single BB processor 1626 or a single RF circuit 1627.

### [Second Application Example]

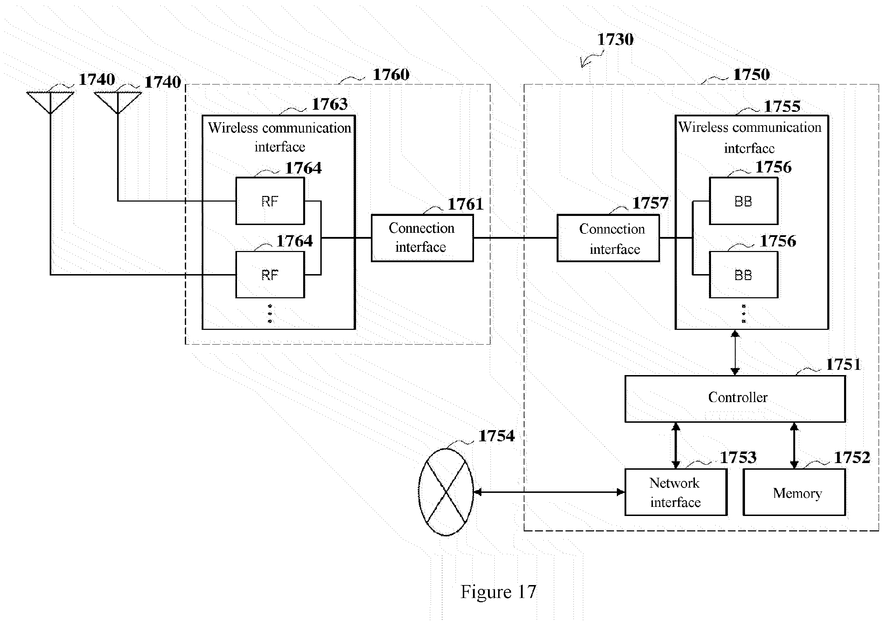

Figure 17 is a block diagram showing a second schematic configuration example of a gNB to which the technology of the present disclosure may be applied. A gNB 1730 includes one or more antennas 1740, a base station device 1750, and an RRH 1760. The RRH 1760 and each antenna 1740 may be connected to each other via an RF cable. The base station device 1750 and the RRH 1760 may be connected to each other via a high speed line such as an optical fiber cable.

Each of the antennas 1740 includes a single or multiple antenna elements (such as multiple antenna elements included in an MIMO antenna), and is used for the RRH 1760 to transmit and receive wireless signals. As shown in Figure 17, the gNB 1730 may include the multiple antennas 1740. For example, the multiple antennas 1740 may be compatible with multiple frequency bands used by the gNB 1730. Although Figure 17 shows the example in which the gNB 1730 includes the multiple antennas 1740, the gNB 1730 may further include a single antenna 1740.

The base station device 1750 includes a controller 1751, a memory 1752, a network interface 1753, a wireless communication interface 1755, and a connection interface 1757. The controller 1751, the memory 1752, and the network interface 1753 are the same as the controller 1621, the memory 1622, and the network interface 1623 described with reference to Figure 16.

The wireless communication interface 1755 supports any cellular communication scheme (such as LTE and LTE-Advanced), and provides wireless communication to a terminal positioned in a sector corresponding to the RRH 1760 via the RRH 1760 and the antenna 1740. The wireless communication interface 1755 may typically include, for example, a BB processor 1756. The BB processor 1756 is the same as the BB processor 1726 described with reference to Figure 16, except that the BB processor 1756 is connected to an RF circuit 1764 of the RRH 1760 via the connection interface 1757. As shown in Figure 17, the wireless communication interface 1755 may include the multiple BB processors 1756. For example, the multiple BB processors 1756 may be compatible with multiple frequency bands used by the gNB 1730. Although Figure 17 shows the example in which the wireless communication interface 1755 includes the multiple BB processors 1756, the wireless communication interface 1755 may further include a single BB processor 1756.

The connection interface 1757 is an interface for connecting the base station device 1750 (the wireless communication interface 1755) to the RRH 1760. The connection interface 1757 may further be a communication module for communication in the above-described high speed line that connects the base station device 1750 (the wireless communication interface 1755) to the RRH 1760.

The RRH 1760 includes a connection interface 1761 and a wireless communication interface 1763.

The connection interface 1761 is an interface for connecting the RRH 1760 (the wireless communication interface 1763) to the base station device 1750. The connection interface 1761 may also be a communication module for communication in the above-described high speed line.

The wireless communication interface 1763 transmits and receives wireless signals via the antenna 1740. The wireless communication interface 1763 may typically include, for example, the RF circuit 1764. The RF circuit 1764 may include, for example, a mixer, a filter, and an amplifier, and transmits and receives wireless signals via the antenna 1740. As shown in Figure 17, the wireless communication interface 1763 may include multiple RF circuits 1764. For example, the multiple RF circuits 1764 may support multiple antenna elements. Although Figure 17 shows the example in which the wireless communication interface 1763 includes the multiple RF circuits 1764, the wireless communication interface 1763 may further include a single RF circuit 1764.

In the gNB 1600 and the gNB 1730 shown in Figures 16 and 17, the interference determination unit 220, the configuration unit 230, the strategy determination unit 240, the generation unit 250 and the generation unit 260 described in Figure 2 may be implemented by at least one of the controller 1621 and the controller 1751. At least part of functions may further be implemented by the controller 1621 and the controller 1751. For example, at least one of the controller 1621 and the controller 1751 may implement the functions of determining whether to generate the interference, configuring the reporting principle of the spatial radiation parameter, determining the interference coordination strategy, generating beam adjustment indication information and generating frequency domain resource adjustment request information by executing instructions stored in a memory corresponding to the function.

### [Application Examples of Terminal Device]

### [First Application Example]

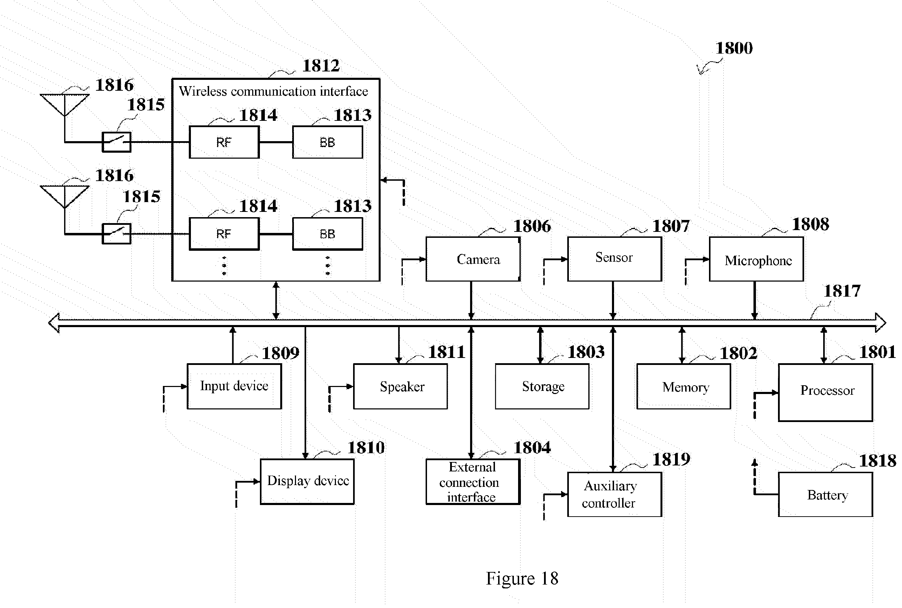

Figure 18 is a block diagram showing a schematic configuration example of a smart phone 1800 to which the technology of the present disclosure may be applied. The smart phone 1800 includes a processor 1801, a memory 1802, a storage 1803, an external connection interface 1804, a camera 1806, a sensor 1807, a microphone 1808, an input device 1809, a display device 1810, a speaker 1811, a wireless communication interface 1812, one or more antenna switches 1815, one or more antennas 1816, a bus 1817, a battery 1818, and an auxiliary controller 1819.

The processor 1801 may be, for example, a CPU or a system on a chip (SoC), and controls functions of an application layer and another layer of the smart phone 1800. The memory 1802 includes RAM and ROM, and stores a program executed by the processor 1801 and data. The storage 1803 may include a storage medium such as a semiconductor memory and a hard disk. The external connection interface 1804 is an interface for connecting an external apparatus (such as a memory card and a universal serial bus (USB) apparatus) to the smart phone 1800.

The camera 1806 includes an image sensor (such as a charge coupled device (CCD) and a complementary metal oxide semiconductor (CMOS)), and generates a captured image. The sensor 1807 may include a group of sensors such as a measurement sensor, a gyro sensor, a geomagnetic sensor, and an acceleration sensor. The microphone 1808 converts sounds that are inputted to the smart phone 1800 to audio signals. The input device 1809 includes, for example, a touch sensor configured to detect touch onto a screen of the display device 2510, a keypad, a keyboard, a button, or a switch, and receive an operation or information inputted from a user. The display device 1810 includes a screen (such as a liquid crystal display (LCD) and an organic light-emitting diode (OLED) display), and displays an output image of the smart phone 1800. The speaker 1811 converts audio signals that are outputted from the smart phone 1800 to sounds.

The wireless communication interface 1812 supports any cellular communication scheme (such as LTE and LTE-Advanced), and performs wireless communication. The wireless communication interface 1812 may typically include, for example, a BB processor 1813 and a RF circuit 1814. The BB processor 1813 may perform, for example, encoding/decoding, modulating/demodulating, and multiplexing/demultiplexing, and performs various types of signal processing for wireless communication. In addition, the RF circuit 1814 may include, for example, a mixer, a filter, and an amplifier, and transmits and receives wireless signals via the antenna 1816. The wireless communication interface 1812 may be a chip module having the BB processor 1813 and the RF circuit 1814 integrated thereon. As shown in Figure 18, the wireless communication interface 1812 may include multiple BB processors 1813 and multiple RF circuits 1814. Although Figure 18 shows the example in which the wireless communication interface 1812 includes the multiple BB processors 1813 and the multiple RF circuits 1814, the wireless communication interface 2512 may also include a single BB processor 1813 or a single RF circuit 1814.

Furthermore, in addition to a cellular communication scheme, the wireless communication interface 1812 may support another type of wireless communication scheme such as a short-distance wireless communication scheme, a near field communication scheme, and a wireless local area network (LAN) scheme. In this case, the wireless communication interface 1812 may include the BB processor 1813 and the RF circuit 1814 for each wireless communication scheme.

Each of the antenna switches 1815 switches connection destinations of the antennas 1816 among multiple circuits (such as circuits for different wireless communication schemes) included in the wireless communication interface 1812.

Each of the antennas 1816 includes a single or multiple antenna elements (such as multiple antenna elements included in an MIMO antenna), and is used for the wireless communication interface 1812 to transmit and receive wireless signals. As shown in Figure 18, the smart phone 1800 may include the multiple antennas 1816. Although Figure 18 shows the example in which the smart phone 1800 includes the multiple antennas 1816, the smart phone 1800 may also include a single antenna 1816.

Furthermore, the smart phone 1800 may include the antenna 1816 for each wireless communication scheme. In this case, the antenna switches 1815 may be omitted from the configuration of the smart phone 1800.

The bus 1817 connects the processor 1801, the memory 1802, the storage 1803, the external connection interface 1804, the camera 1806, the sensor 1807, the microphone 1808, the input device 1809, the display device 1810, the speaker 1811, the wireless communication interface 1812, and the auxiliary controller 1819 to each other. The battery 1818 supplies power to blocks of the smart phone 1800 shown in Figure 18 via feeder lines that are partially shown as dashed lines in the Figure 18. The auxiliary controller 1819 operates a minimum necessary function of the smart phone 1800, for example, in a sleep mode.

### [Second Application Example]

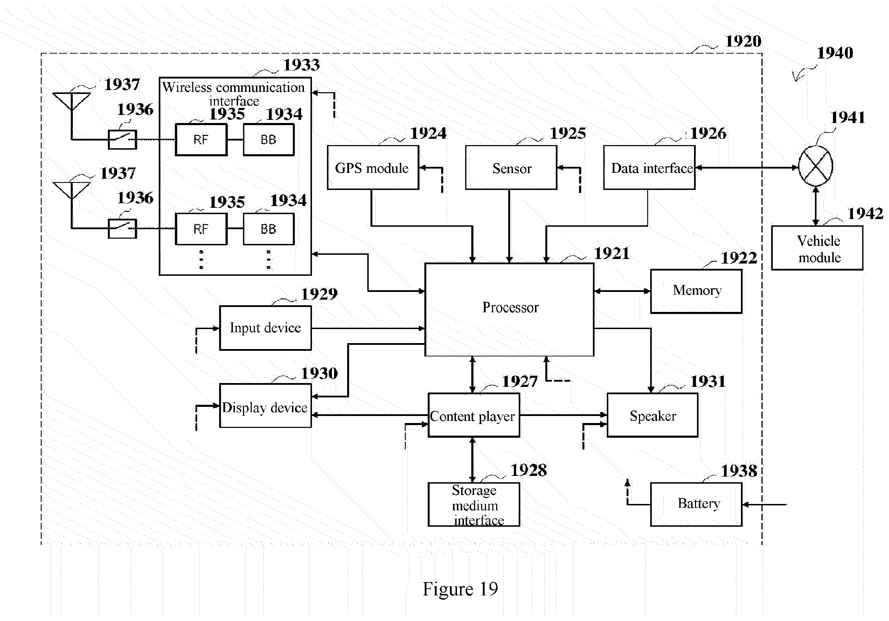

Figure 19 is a block diagram showing a schematic configuration example of a car navigation apparatus 1920 to which the technology of the present disclosure may be applied. The car navigation apparatus 1920 includes a processor 1921, a memory 1922, a global positioning system (GPS) module 1924, a sensor 1925, a data interface 1926, a content player 1927, a storage medium interface 1928, an input device 1929, a display device 1930, a speaker 1931, a wireless communication interface 1933, one or more antenna switches 1936, one or more antennas 1937, and a battery 1938.

The processor 1921 may be, for example, a CPU or a SoC, and controls a navigation function and another function of the car navigation apparatus 1920. The memory 1922 includes a RAM and a ROM, and stores a program executed by the processor 1921 and data.

The GPS module 1924 determines a position (such as latitude, longitude, and altitude) of the car navigation apparatus 1920 by using GPS signals received from a GPS satellite. The sensor 1925 may include a group of sensors such as a gyro sensor, a geomagnetic sensor, and an air pressure sensor. The data interface 1926 is connected to, for example, an in-vehicle network 1941 via a terminal that is not shown, and acquires data (such as vehicle speed data) generated by the vehicle.

The content player 1927 reproduces content stored in a storage medium (such as a CD and a DVD) that is inserted into the storage medium interface 1928. The input device 1929 includes, for example, a touch sensor configured to detect touch onto a screen of the display device 1930, a button or a switch, and receives an operation or information inputted from a user. The display device 1930 includes a screen such as an LCD or an OLED display, and displays an image of the navigation function or content that is reproduced. The speaker 1931 outputs sounds of the navigation function or the content that is reproduced.

The wireless communication interface 1933 supports any cellular communication scheme (such as LTE and LTE-Advanced), and performs wireless communication. The wireless communication interface 1933 may typically include, for example, a BB processor 1934 and an RF circuit 1935. The BB processor 1934 may perform, for example, encoding/decoding, modulating/demodulating, and multiplexing/demultiplexing, and performs various types of signal processing for wireless communication. In addition, the RF circuit 1935 may include, for example, a mixer, a filter, and an amplifier, and transmits and receives wireless signals via the antenna 1937. The wireless communication interface 1933 may also be a chip module having the BB processor 1934 and the RF circuit 1935 integrated thereon. As shown in Figure 19, the wireless communication interface 1933 may include the multiple BB processors 1934 and the multiple RF circuits 1935. Although Figure 19 shows the example in which the wireless communication interface 1933 includes the multiple BB processors 1934 and the multiple RF circuits 1935, the wireless communication interface 1933 may also include a single BB processor 1934 or a single RF circuit 1935.

Furthermore, in addition to the cellular communication scheme, the wireless communication interface 1933 may support another type of wireless communication scheme such as a short-distance wireless communication scheme, a near field communication scheme, and a wireless LAN scheme. In this case, the wireless communication interface 1933 may include the BB processor 1934 and the RF circuit 1935 for each wireless communication scheme.

Each of the antenna switches 1936 switches connection destinations of the antennas 1937 among multiple circuits (such as circuits for different wireless communication schemes) included in the wireless communication interface 1933.

Each of the antennas 1937 includes a single or multiple antenna elements (such as multiple antenna elements included in an MIMO antenna), and is used for the wireless communication interface 1933 to transmit and receive wireless signals. As shown in Figure 19, the car navigation apparatus 1920 may include the multiple antennas 1937. Although Figure 19 shows the example in which the car navigation apparatus 1920 includes the multiple antennas 1937, the car navigation apparatus 1920 may also include a single antenna 1937.

Furthermore, the car navigation apparatus 1920 may include the antenna 1937 for each wireless communication scheme. In this case, the antenna switches 1936 may be omitted from the configuration of the car navigation apparatus 1920.

The battery 1938 supplies power to blocks of the car navigation apparatus 1920 shown in Figure 19 via feeder lines that are partially shown as dashed lines in the Figure 19. The battery 1938 accumulates power supplied from the vehicle.

The technology of the present disclosure may also be implemented as an in-vehicle system (or a vehicle) 1940 including one or more blocks of the car navigation apparatus 1920, the in-vehicle network 1941 and a vehicle module 1942. The vehicle module 1942 generates vehicle data (such as a vehicle speed, an engine speed or failure information), and outputs the generated data to the in-vehicle network 1941.

Preferred embodiments of the present disclosure are described above with reference to the drawings, but the present disclosure is not limited to the above examples. Those skilled in the art may obtain various alternations and modifications within the scope of the appended claims. In addition, it should be understood that these alternations and modifications are naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by one unit in the above embodiments may be implemented by separate devices. Alternatively, multiple functions implemented by multiple units in the above embodiments may be implemented by separate devices, respectively. In addition, one of the above functions may be implemented by multiple units. Such configurations are naturally included in the technical scope of the present disclosure.

In the specification, steps described in the flow charts include not only the processes performed chronologically as the described sequence, but also the processes performed in parallel or individually rather than chronologically. Furthermore, the steps performed chronologically may be performed in other order appropriately.

Although the embodiments of the present disclosure have been described above in detail in connection with the drawings, it should be understood that the embodiments described above are illustrative rather than limitative of the present disclosure. Those skilled in the art can make various modifications and variations to the above embodiments without departing from the essence and scope of the present disclosure. Therefore, the scope of the present disclosure is defined merely by the appended claims and their equivalents.

## Claims

1. An electronic device, comprising processing circuitry configured to:
receive a spatial radiation parameter related to a spatial radiation feature of a transmitting antenna of a user equipment; and
determine, according to the spatial radiation parameter of the user equipment, whether an uplink signal from the user equipment generates interference to other electronic device.

2. The electronic device according to claim 1, wherein the spatial radiation parameter of the user equipment comprises a radiation direction parameter of a primary beam of the transmitting antenna and a polarization direction parameter of the transmitting antenna, and wherein the processing circuitry is further configured to:
configure, for the user equipment, the number of the primary beam comprised in the spatial radiation parameter.

3. The electronic device according to claim 1, wherein the spatial radiation parameter of the user equipment comprises a beam width parameter of the primary beam of the transmitting antenna, and wherein the processing circuitry is further configured to:
configure, for the user equipment, a range of a beam width of the primary beam.

4. The electronic device according to claim 2 or 3, wherein the primary beam comprises a main lobe and at least two strong sidelobes.

5. The electronic device according to claim 1, wherein the processing circuitry is further configured to:
periodically receive the spatial radiation parameter of the user equipment.

6. The electronic device according to claim 1, wherein the processing circuitry is further configured to:
receive ephemeris information of the other electronic device; and
determine, according to the spatial radiation parameter of the user equipment, frequency domain resources of the user equipment, frequency domain resources of the other electronic device and the ephemeris information of the other electronic device, whether the uplink signal from the user equipment generates interference to the other electronic device.

7. The electronic device according to claim 6, wherein the processing circuitry is further configured to:
determine, in a case where the frequency domain resources of the user equipment are the same as the frequency domain resources of the other electronic device, according to the spatial radiation parameter of the user equipment and the ephemeris information of the other electronic device, whether the uplink signal from the user equipment generates interference to the other electronic device.

8. The electronic device according to claim 1, wherein the processing circuitry is further configured to:
determine, in a case where an uplink signal from the user equipment generates interference to the other electronic device, an interference coordination strategy to be used for the user equipment to adjust a beam or for the other electronic device to adjust frequency domain resources.

9. The electronic device according to claim 8, wherein the processing circuitry is further configured to:
determine, according to a beamforming capability of the user equipment, whether the user equipment is capable of adjusting a beam;
generate, in a case where the user equipment is capable of adjusting a beam, beam adjustment indication information for the user equipment to adjust the beam; and
generate, in a case where the user equipment is incapable of adjusting a beam, frequency domain resource adjustment request information for the other electronic device to adjust frequency domain resources, wherein the frequency domain resource adjustment request information comprises interfered frequency domain resource information and/or adjusted frequency domain resource information of the other electronic device, and receive, from the other electronic device, frequency domain resource adjustment response information comprising the adjusted frequency domain resource information.

10. The electronic device according to claim 9, wherein the beam adjustment indication information comprises:
time information of beam adjustment; and
ephemeris information of interfered other electronic device or adjusted beam information.

11. The electronic device according to claim 9, wherein the processing circuitry is further configured to:
transmit the frequency domain resource adjustment request information to the other electronic device, and/or receive the frequency domain resource adjustment response information from the other electronic device by multiplexing a channel carrying information other than the frequency domain resource adjustment request information and the frequency domain resource adjustment response information; or
transmit the frequency domain resource adjustment request information to the other electronic device, and/or receive the frequency domain resource adjustment response information from the other electronic device by using a dedicated channel for the frequency domain resource adjustment request information and the frequency domain resource adjustment response information.

12. The electronic device according to claim 1, wherein the electronic device is a central unit (CU) device, the other electronic device is a distributed unit (DU) device, and the processing circuitry is further configured to:
determine whether an uplink signal from the user equipment to a DU device providing services for the user equipment generates interference to other DU device;
generate an interference prediction report in a case where the uplink signal from the user equipment generates interference to other DU device, wherein the interference prediction report comprises identification information of the user equipment, identification information of the other DU device and ephemeris information of the other DU device; and
transmit the interference prediction report to the DU device providing services for the user equipment.

13. The electronic device according to claim 1, wherein the other electronic device is a satellite device.

14. A distributed unit (DU) device, comprising processing circuitry configured to:
determine, according to an interference prediction report, an uplink signal from a user equipment to the DU device generates interference to other DU device, wherein the interference prediction report comprises identification information of the user equipment, identification information of the other DU device and ephemeris information of the other DU device; and
determine an interference coordination strategy for the user equipment to adjust a beam or for the other DU device to adjust frequency domain resources.

15. The DU device according to claim 14, wherein the processing circuitry is further configured to:
receive a beamforming capability of the user equipment from the user equipment;
generate, in a case where the beamforming capability of the user equipment indicates that the user equipment is capable of adjusting a beam, beam adjustment indication information for the user equipment to adjust a beam; and
generate, in a case where the beamforming capability of the user equipment indicates that the user equipment is incapable of adjusting a beam, frequency domain resource adjustment request information for the other DU device to adjust frequency domain resources, wherein the frequency domain resource adjustment request information comprises adjusted frequency domain resource information; and receive frequency domain resource adjustment response information comprising the adjusted frequency domain resource information.

16. The DU device according to claim 15, wherein the beam adjustment indication information comprises:
time information of beam adjustment; and
ephemeris information of the other DU device or adjusted beam information.

17. The DU device according to claim 14, wherein the processing circuitry is further configured to:
receive, from the user equipment, a spatial radiation parameter related to a spatial radiation feature of a transmitting antenna of the user equipment;
transmit the spatial radiation parameter of the user equipment to the control unit (CU) device; and
receive, from the CU device, the interference prediction report determined according to the spatial radiation parameter of the user equipment.

18. The DU device according to claim 17, wherein the spatial radiation parameter of the user equipment comprises one or more of the following parameters:
a radiation direction parameter of a primary beam of the transmitting antenna, a polarization direction parameter of the transmitting antenna, and a beam width parameter of the primary beam.

19. The DU device according to claim 18, wherein the primary beam comprises a main lobe and at least two strong sidelobes.

20. A wireless communication method performed by an electronic device, comprising:
receiving a spatial radiation parameter related to a spatial radiation feature of a transmitting antenna of a user equipment; and
determining, according to the spatial radiation parameter of the user equipment, whether an uplink signal from the user equipment generates interference to other electronic device.

21. The wireless communication method according to claim 20, wherein the spatial radiation parameter of the user equipment comprises a radiation direction parameter of a primary beam of the transmitting antenna and a polarization direction parameter of the transmitting antenna, and wherein the wireless communication method further comprises:
configuring, for the user equipment, the number of the primary beam comprised in the spatial radiation parameter.

22. The wireless communication method according to claim 20, wherein the spatial radiation parameter of the user equipment comprises a beam width parameter of the primary beam of the transmitting antenna, and wherein the wireless communication method further comprises:
configuring, for the user equipment, a range of a beam width of the primary beam.

23. The wireless communication method according to claim 21 or 22, wherein the primary beam comprises a main lobe and at least two strong sidelobes.

24. The wireless communication method according to claim 20, further comprising:
periodically receiving the spatial radiation parameter of the user equipment.

25. The wireless communication method according to claim 20, further comprising:
receiving ephemeris information of the other electronic device; and
determining, according to the spatial radiation parameter of the user equipment, frequency domain resources of the user equipment, frequency domain resources of the other electronic device and the ephemeris information of the other electronic device, whether the uplink signal from the user equipment generates interference to the other electronic device.

26. The wireless communication method according to claim 25, wherein the determining whether the uplink signal from the user equipment generates interference to the other electronic device comprises:
determining, in a case where the frequency domain resources of the user equipment are the same as the frequency domain resources of the other electronic device, according to the spatial radiation parameter of the user equipment and the ephemeris information of the other electronic device, whether the uplink signal from the user equipment generates interference to the other electronic device.

27. The wireless communication method according to claim 20, further comprising:
determining, in a case where an uplink signal from the user equipment generates interference to the other electronic device, an interference coordination strategy to be used for the user equipment to adjust a beam or for the other electronic device to adjust frequency domain resources.

28. The wireless communication method according to claim 27, wherein the determining an interference coordination strategy comprises:
determining, according to a beamforming capability of the user equipment, whether the user equipment is capable of adjusting a beam;
generating, in a case where the user equipment is capable of adjusting a beam, beam adjustment indication information for the user equipment to adjust the beam; and
generating, in a case where the user equipment is incapable of adjusting a beam, frequency domain resource adjustment request information for the other electronic device to adjust frequency domain resources, wherein the frequency domain resource adjustment request information comprises at least one of interfered frequency domain resource information and adjusted frequency domain resource information of the other electronic device; and receiving, from the other electronic device, frequency domain resource adjustment response information comprising the adjusted frequency domain resource information.

29. The wireless communication method according to claim 28, wherein the beam adjustment indication information comprises:
time information of beam adjustment; and
ephemeris information of interfered other electronic device or adjusted beam information.

30. The wireless communication method according to claim 28, further comprising:
transmit the frequency domain resource adjustment request information to the other electronic device, and/or receive the frequency domain resource adjustment response information from the other electronic device by multiplexing a channel carrying information other than the frequency domain resource adjustment request information and the frequency domain resource adjustment response information; or
transmit the frequency domain resource adjustment request information to the other electronic device, and/or receive the frequency domain resource adjustment response information from the other electronic device by using a dedicated channel for the frequency domain resource adjustment request information and the frequency domain resource adjustment response information.

31. The wireless communication method according to claim 20, wherein the electronic device is a central unit (CU) device, the other electronic device is a distributed unit (DU) device, and the wireless communication method further comprises:
determining whether an uplink signal from the user equipment to a DU device providing services for the user equipment generates interference to other DU device;
generating an interference prediction report in a case where the uplink signal from the user equipment generates interference to the other DU device, wherein the interference prediction report comprises identification information of the user equipment, identification information of the other DU device and ephemeris information of the other DU device; and
transmitting the interference prediction report to the DU device providing services for the user equipment.

32. The wireless communication method according to claim 20, wherein the other electronic device is a satellite device.

33. A wireless communication method performed by a distributed unit (DU) device, comprising:
determining, according to an interference prediction report, an uplink signal from a user equipment to the DU device generates interference to other DU device, wherein the interference prediction report comprises identification information of the user equipment, identification information of the other DU device and ephemeris information of the other DU device; and
determining an interference coordination strategy for the user equipment to adjust a beam or for the other DU device to adjust frequency domain resources.

34. The wireless communication method according to claim 33, wherein the determining an interference coordination strategy comprises:
receiving a beamforming capability of the user equipment from the user equipment;
generating, in a case where the beamforming capability of the user equipment indicates that the user equipment is capable of adjusting a beam, beam adjustment indication information for the user equipment to adjust a beam; and
generating, in a case where the beamforming capability of the user equipment indicates that the user equipment is incapable of adjusting a beam, frequency domain resource adjustment request information for the other DU device to adjust frequency domain resources, wherein the frequency domain resource adjustment request information comprises adjusted frequency domain resource information; and receiving frequency domain resource adjustment response information comprising the adjusted frequency domain resource information.

35. The wireless communication method according to claim 34, wherein the beam adjustment indication information comprises:
time information of beam adjustment; and
ephemeris information of the other DU device or adjusted beam information.

36. The wireless communication method according to claim 33, further comprising:
receiving, from the user equipment, a spatial radiation parameter related to a spatial radiation feature of a transmitting antenna of the user equipment;
transmitting the spatial radiation parameter of the user equipment to the control unit (CU) device; and
receiving, from the CU device, the interference prediction report determined according to the spatial radiation parameter of the user equipment.

37. The wireless communication method according to claim 36, wherein the spatial radiation parameter of the user equipment comprises one or more of the following parameters:
a radiation direction parameter of a primary beam of the transmitting antenna, a polarization direction parameter of the transmitting antenna, and a beam width parameter of the primary beam.

38. The wireless communication method according to claim 37, wherein the primary beam comprises a main lobe and at least two strong sidelobes.

39. A computer-readable storage medium comprising computer-executable instructions that, when executed by a computer, cause the computer to perform the wireless communication method according to any one of claims 20 to 38.
